# EUROPÄISCHE PATENTANMELDUNG

(11) **EP 3 780 145 A1**
(43) Veröffentlichungstag der Anmeldung: **17.02.2021**
(21) Anmeldenummer: 20189701.4
(22) Anmeldetag: 03.04.2018
(51) Int. Cl.: H01M 2/10, H01M 2/30, H01M 10/625, H01M 10/6567, H01M 10/613, H01M 10/052, H01M 10/6557, H01M 10/6555, H01M 10/04, H01M 10/0525, H01M 10/6554, H01M 10/6562, H01M 2/02

(54) **TRAKTIONSAKKUMULATOR FÜR EIN KRAFTFAHRZEUG, INSBESONDERE MIT BENACHBART ANGEORDNETEN LITHIUM-IONEN-SEKUNDÄRZELLEN, UND VERFAHREN ZUR HERSTELLUNG DES TRAKTIONSAKKUMULATORS**

(30) Priorität: 03.04.2017 DE 202017101961 U; 30.06.2017 DE 102017114749
(62) Teilanmeldung aus: 18165530.9
(71) Anmelder: hofer powertrain innovation GmbH, 85748 Garching bei München (DE)
(72) Erfinder: Sluka, Gerold, 72622 Nürtingen-Oberensingen (DE); Meinhardt, Jonas, 70329 Stuttgart (DE); Traichel, Daniel, 74354 Besigheim (DE); Metzger, Marvin, 72644 Oberboihingen (DE); Feil, Tobias, 70794 Filderstadt (DE); Sailer, Philipp, 72589 Westerheim (DE); Prof. Dr. Ing. Böhm, Kai André, 71672 Marbach am Neckar (DE)
(74) Vertreter: Cremer, Christian

(57) **Zusammenfassung**

Bei einem Traktionsakkumulator (101^{l}) bilden Lithium-Ionen-Sekundärzellen (153, 153^{l}) nebeneinander angeordnet ein Akkumulatorpaket. Eine oder mehrere der Lithium-Ionen-Sekundärzellen (153, 153^{l}) werden von je einem Gehäuse eingefasst. Die Lithium-Ionen-Sekundärzellen (153, 153^{l}) enthalten jeweils eine positive und eine negative Elektrode, einen Separator und einen nicht-wässrigen Elektrolyten. Wärme aus aktiven Flächen der Lithium-Ionen-Sekundärzellen (153, 153^{l}) kann in das Gehäuse geleitet werden. Der Traktionsakkumulator (101^{l}) ist herstellbar als ein Strangpressprofil durch einen Strangpressvorgang. Das Strangpressprofil wird mittels Abdeckplatten verschlossen, die teilweise einen Kontakt (147, 149) aufweisen, so dass eine elektrische Verbindungsstelle aus dem Gehäuse heraus vorhanden ist.

## Beschreibung

Die vorliegende Erfindung behandelt einen Traktionsakkumulator, bei dem die Sekundärzellen wie Lithium-Ionen-Sekundärzellen nebeneinander angeordnet ein Akkumulatormodul bilden. Mit anderen Worten, die vorliegende Erfindung behandelt einen Traktionsakkumulator für ein Kraftfahrzeug, wie einen Personenkraftwagen, nach dem Oberbegriff des Anspruchs 1.

Außerdem behandelt die vorliegende Erfindung einen Herstellungsprozess eines Traktionsakkumulators, insbesondere nach dem Oberbegriff des Anspruchs 16.

### Technisches Gebiet

Aus der Literatur und durch Kleinserien sind Elektrofahrzeuge, insbesondere für den Straßenbetrieb, bekannt, die eine größere Anzahl elektrochemischer Sekundärzellen, vorzugsweise auf Lithium-Ionen-Basis, zu einer Hochvolt-(z. B. 400 Volt bis 850 Volt)-Energiequelle elektrisch und mechanisch zusammenschließen. Dabei richtet sich das Augenmerk bei der Entwicklung geeigneter Traktionsakkumulatoren unter anderem auf die technischen Schwierigkeiten
- der gewünschten hohen Energiedichte (gemessen z. B. in Wh pro Liter Batterie-Volumen),
- auf möglichst geringe Gewichte pro elektrischer Kapazität (gemessen z. B. in Kilo pro Farad),
- auf eine möglichst ausgeglichene Wärmeleitfähigkeit (gemessen z. B. in Watt pro Meter und Kelvin) und
- auf einen akzeptablen Temperaturgradient (gemessen z. B. in Kelvin pro Meter).

Bei Traktionsakkumulatoren taucht noch die Schwierigkeit auf, dass diese, sollen sie z. B. in einem Personenkraftfahrzeug verbaut werden, möglichst mechanisch stabil, insbesondere verwindungssteif ausgeführt sein sollen. Die Forderungen widersprechen sich zumindest teilweise erheblich. Mechanisch stabile Traktionsakkumulatoren sind in der Regel schwerer und haben deswegen eine geringere Energiedichte pro Gramm als leichter ausgeführte Akkumulatoren, z. B. im Bereich der Unterhaltungselektronik.

Die vorliegende Erfindung beschäftigt sich in dem Gebiet der Traktionsakkumulatoren mit dem Thema, wie ein Akkumulatorenmodul gestaltet werden kann, das einen akzeptablen Kompromiss zwischen den sich widerstreitenden Anforderungen darstellt.

Eine in zahlreichen Druckschriften vorgestellte Sekundärzellenbauform ist die prismatische Zelle, die gerne für Lithium-Ionen-Akkumulatoren im mobilen Bereich wie im Kraftfahrzeugbereich eingesetzt wird. Aufgrund der gewünscht kurzen Ladezeiten zum Aufladen eines Traktionsakkumulators werden Überlegungen angestellt, wie die bei der Ladung der Akkumulatoren entstehende Wärme möglichst günstig austragbar ist.

Hierbei kann erwogen werden, welcher der Akkumulatorentypen, von denen es u. a. solche Typen wie Pouch-Zellen, prismatische Zellen und Hard-Cover-Module gibt, der aussichtsreichste Kandidat für eine optimierte Gestaltung sein kann. Die einzelnen Typen können anhand der Patentliteratur dargestellt werden.

### Stand der Technik

Die US 2014/154 549 A1 (Anmelderin: GrafTech International Holdings, Inc.; Anmeldetag: 13.08.2012) zeigt eine Stapelanordnung mit Wärmesenke, der die Wärme von den Akkumulatorenzellen über thermische Übertragungsblätter zugeführt werden soll. Wie der Figur 1 der US 2014/154 549 A1 zu entnehmen ist, wird erst durch ein rahmenartiges Gehäuse eine mechanische Festigkeit des Stapels erzeugt.

In der DE 10 2012 000 871 A1 (Anmelderin: Li-Tec Battery GmbH; Offenlegungstag: 18.07.2013) werden Zellengehäuse für elektrochemische Zellen zum Aufbau eines elektrochemischen Energiespeichers beschrieben, wobei das Zellengehäuse im Wesentlichen starr ausgebildet ist. Erste und zweite Gehäusewände weisen jeweils einen Kühlmittelkanal auf. Beide Kanäle sind im Zellengehäuse strömungstechnisch miteinander verbunden. Durch Integration der Kühlmittelkanäle in das Zellengehäuse wird auf gesonderte Kühlplatten verzichtet.

Die US 2016/049 704 A1 (Anmelderin: GrafTech International Holdings Inc.; Prioritätstag: 04.06.2012) beschreibt eine gestapelte Anordnung von prismatisch geformten Akkumulatoren, die einseitig in einer Wärmesenke eingespannt durch Hitzeverteilplatten die entstehende Wärme beim Laden auf die Wärmesenke übertragen sollen. Die in den Figuren dargestellten Zellen (Sekundärzellen) werden in den Fachkreisen auch als Pouch-Zellen aufgrund ihres laminierten Einpackens bezeichnet. Die Zellen selbst sind aus einem Material gefertigt, bei dem nicht die mechanische Stabilität im Vordergrund steht, sondern die elektrochemische Funktionalität. Daher dürfte der in der US 2016/049 704 A1 vorgeschlagene Stapel aufgrund der unter anderem flexiblen Grafitschicht nicht besonders mechanisch stabil sein.

Die US 2016/056 427 A1 (Anmelderin: LG Chem, Ltd.; Anmeldetag: 15.05.2013) startet ebenfalls von den Pouch-Zellen, wobei zwischen zwei Pouch-Zellen ein stabilisierender Cartridge-Rahmen gesamtflächig zwischen den beiden Zellen angeordnet ist. D. h., die mechanische Stabilität wird durch die Vielfache Verwendung von stabilisierenden Rahmen erzeugt.

Die DE 603 08 598 T2 (Patentinhaberin: Nissan Motor Co., Ltd.; Erteilungstag: 27.09.2006), auch veröffentlicht als EP 1 376 718 A2, beschäftigt sich mit Pouch-Zellen. Diese werden in ihren Abmessungen nach verschiedenen Kriterien optimiert. Hierbei werden nahezu unzählige Varianten für einzelne Abmessungen, insbesondere auch tabellarisch, aufgelistet. Ein Leser der EP 1 376 718 A2 kommt also zu den unterschiedlichsten Proportionen, ohne zu wissen, welcher Proportion tatsächlich bei Pouch-Zellen der Vorzug zu geben ist.

Die US 8 231 996 B2 (Patentinhaber: Keith Howard, Sheau-Pyng Lin; Erteilungstag: 20.08.2009) beschäftigt sich mit Rundzellen und offeriert für diese Zellen angeblich geeignete Abmessungen und Verhältnisse.

In der DE 10 2009 046 801 A1 (Anmelderin: SB LiMotive Company Ltd.; Offenlegungstag: 19.05.2011) wird eine Batteriezelle beschrieben, bei der eine Länge, die zu einer Grundfläche gehört, zumindest in einer Ausdehnung, die die maximale Ausdehnung sein soll, größer ist als die durch die Seitenfläche definierte Höhe des Batteriezellenkörpers. Die Bodenfläche soll als Kontaktfläche für eine angeschlossene Kühlung dienen. Terminals der Batteriezelle können an zwei sich gegenüberliegenden Seitenflächen angeordnet sein. An der Seitenfläche befindet sich außerdem eine Berstdrucköffnung, vorzugsweise unterhalb des Terminals und mit einem Ventil versehen. Eine Aufteilung der Batteriezelle durch Trennwände in Zelleinheiten dient dazu, Wärme über die Trennwände vom Innenraum zur Oberfläche der Batteriezelle zu leiten.

Die DE 10 2005 031 504 A1 (Anmelderin: DaimlerChrysler AG; Offenlegungstag: 11.01.2007) beschäftigt sich mit einer Traktionsbatterie auf der Basis von Lithium, bei der der Kühlkörper für einen Stapel aus prismatischen Modulen im Mittelpunkt der Betrachtungen steht. Die einzelnen Zellen im Inneren eines Moduls bestehen aus zwischen flächig ausgebreiteten Folien angeordneter, aktiver Masse und einem Elektrolyt und sind durch Stege voneinander getrennt. Das Zellendesign sei für folienartige elektrochemische Zellen bereits das optimale, weshalb das Augenmerk auf die Weiterentwicklung der Kühlung zu richten sei. In jedem der Stege ist eine Ausnehmung angeordnet. Mit einem zentralen Kühlkörper verbundene Kühlrippen sollen in die Ausnehmungen der Stege hineinragen. Durch diese Gestaltung mit Stegen und in sie hineinragenden Kühlrippen soll es möglich sein, die Gehäuse der einzelnen Module über gießtechnische Herstellungsverfahren zu produzieren.

Eine um einen elektrochemischen Stapel außen herumgeführte, U-förmige Kühlplatte, so wie in der US 2014/272 513 A1 (Anmelderin: GM Global Technology Operations LLC; Anmeldetag: 13.03.2013) dargestellt, kann die mechanische Stabilität erhöhen, sie erhöht aber auch das Gesamtgewicht des eingeschlossenen Stapels.

Ein ähnlicher Ansatz, jedoch nicht mit einem Flüssigkühlmittel, wird in der US 2016/197 386 A1 (Anmelderin: LG Chem, Ltd.; Prioritätstag: 28.08.2013) vorgestellt, bei dem zwei kappenartige Halbgehäuse stapelartige Flachzellen komplett überdecken sollen, wobei die Wärmeabfuhr dadurch verbessert werden soll, dass nach dem Zusammenbau über Füllöffnungen in den Kappen ein thermoplastischer Kunstharz in den den Stapel beinhaltenden Innenraum eingespritzt wird.

Die EP 2 064 758 B1 (Patentinhaberin: LG Chem, Ltd.; Prioritätstag: 18.09.2006) stellt in Bildern einen aus flachen Zellen aufgebauten Stapel dar, der anstelle eines Gehäuses an drei Seiten von elektronischen Platinen bedeckt wird, wobei die mit Metallplatten abgedeckten Seiten durch ein Schienensystem ausgestattet sind, damit zwei Stapel über die Schienen zusammengeschoben werden können. Die Stapel sind außerhalb der Platinen- bzw. Metallplattenabdeckung frei zugänglich. Bei beabsichtigten Leerlauf- und auch Betriebsspannungen im dreistelligen Voltbereich dürfte eine solche Modulbauweise Bedenken wegen fehlender Berührsicherheit erzeugen.

In den beiden Patentanmeldungen US 2012/129 024 A1 (Patentanmelderin: Cobasys, LLC; Prioritätstag: 18.11.2010) und WO 2016/053 403 A1 (Anmelderin: Johnson Controls Technology Company; Prioritätstag: 30.09.2014) wird gezeigt, wie einzelne Module zu größeren Akkumulatoren mechanisch verbunden werden können.

Die DE 10 2009 058 809 A1 (Anmelderin: Valeo Klimasysteme GmbH; Offenlegungstag: 22.06.2011) bzw. ihre Nachanmeldung EP 2 337 141 A1 (Anmelderin: Valeo Klimasysteme GmbH; Offenlegungstag: 22.06.2011) und die DE 10 2009 058 810 A1 (Anmelderin: Valeo Klimasysteme GmbH; Offenlegungstag: 22.06.2011) beschäftigen sich damit, wie bei einer Batterie ein Bauteil geschaffen werden kann, dass entweder als Kühlvorrichtung oder als kombiniertes Kühl- und Wärmeübertragungsbauteil genutzt möglichst einfach herzustellen sein soll. Gewisse komplizierte Geometrien sollen durch ein Extrusionsverfahren bzw. durch ein Strangpressverfahren herstellbar sein.

Monolithische Gehäusekörper mit integriertem Flüssigkeitskanal sollen gemäß der DE 10 2016 113 597 A1 (Anmelderin: Ford Global Technologies, LLC; Offenlegungstag: 16.02.2017) durch ein Extrudieren herstellbar sein. In einem Gehäusekörper, der zwei Seitenteile und einen Boden umfasst, lässt sich als Batteriesatz ein Batteriearray auf dem Boden des Gehäuses anordnen. Der Boden sei so auszulegen, dass dieser gleichzeitig das Batteriearray tragen kann und die von den Batteriezellen erzeugte Wärme thermisch behandeln kann. Zwischen den Batteriezellen können zusätzlich thermisch resistente und elektrisch isolierende Abstandshalter vorhanden sein. Ein Zusammenhalt der Batteriezellen entsteht durch Reibungskraft aufgrund eines Zusammendrückens der Zellen während des Zusammenbaus. Als Alternative kann auch Klebstoff verwendet werden. Bei dem Extrudieren wird verflüssigtes Material geformt, sodass während der Herstellung zumindest die Energie zum Erreichen des Schmelzpunkts des eingesetzten Materials aufzubringen ist.

Aus der US 2012/237 805 A1 (Anmelderin: Dana Canada Corporation; Veröffentlichungstag: 20.09.2012) sind Kühlplatten zwischen Batteriezellen bekannt, die von einer Seitenkante mit Kühlmittel versorgt werden. Die Kühlkanäle sollen Einsackstellen (engl. "dimples") oder zur Strömungsrichtung angewinkelte Rippen haben.

Die DE 102011 107007 A1 (Anmelderin: Volkswagen AG; Offenlegungstag: 10.01.2013) beschäftigt sich ebenfalls mit der Gestaltung einer Kühlplatte für eine Traktionsbatterie und kommt zu dem Ergebnis, die Kühlplatte mit integrierten Kühlkanälen aus Leichtmetall in einem Strangpressverfahren fertigen zu wollen. Die DE 10 2015 214 661 A1 (Anmelderin: Volkswagen AG; Offenlegungstag: 10.01.2013) setzt die Erkenntnis der DE 10 2011 107 007 A1 dahingehend fort, dass die Kühlplatte einer Batteriezelle einer Traktionsbatterie die Batteriezelle temperieren kann, wenn die Kühlplatte ein Strangpressprofil ist, das reproduzierbare, gleichmäßige Kühlkanäle aufweist. Hierbei soll mit möglichst geraden Querschnitten gearbeitet werden.

Die WO 2008 034 584 A1 (Anmelderin: MAGNA STEYR FAHRZEUGTECHNIK AG & CO KG; Veröffentlichungstag: 27.03.2008) beschreibt eine modulare Batterieeinheit mit zumindest zwei Batteriezellen sowie mit einem zwischen den Batteriezellen angeordneten und sich seitlich an die Batteriezellen anschmiegenden Kühlkörper, der von einem Kühlmedium durchströmt wird und einerseits in den Batteriezellen entstandene Wärme geeignet abtransportiert und andererseits die Batteriezellen abstützt. Weiterhin gibt es zwei an dem Kühlkörper anordbare Deckkappen. Die Deckkappen sollen als Druckgussteile ausgebildet sein; der Kühlkörper der Batterieeinheit soll durch ein Strangpressen hergestellt sein.

Bei einer Energiespeichereinrichtung gemäß der DE 10 2015 222 138 A1 (Anmelderin: AUDI AG; Offenlegungstag: 11.05.2017) können einzelne Wände aus einem plattenförmigen Strangpressprofil bestehen. Ein solches Strangpressprofil kann außerdem Kühlrohrschlangen für einen Kühlmittelkreislauf aufweisen. Damit kann eine Außenwand eines gekühlten Gehäuses oder eine im Inneren des Gehäuses liegende Wand ausgebildet sein, mit der Speicherzellen oder Speicherzellenmodule ein- oder beidseitig thermisch gekoppelt sein sollen.

Die WO 2009/080 175 A1 (Anmelderin: Daimler AG; Prioritätstag: 20.12.2007) beschreibt ein aus einem Strangpressprofil hergestelltes, beabstandetes, offenes Rahmengehäuse, in dessen Innerem Zellen an einer Wand aufgeschichtet und über diese Wand elektrisch verbunden isoliert zu dem Gehäuse angeordnet sind.

Die US 2015/0 200 429 A1 (Anmelderin: Simplo Technology CO., Ltd.; Veröffentlichungstag: 16.07.2015) beschäftigt sich mit einer Einheit zur Ableitung von Wärme. Hierbei wird, wie auch bei der DE 10 2005 031 504 A1, von der bekannten Problematik ausgegangen, dass sich unterschiedliche Typen von Zellen thermisch ausdehnen können, was insbesondere bei nachgiebigen Gehäusen (engl.: "soft packs") zu Problemen bei der Wärmeableitung führen kann. Zur Abhilfe wird in der US 2015/0 200 429 A1 vorgeschlagen, sog. expandierbare Kühlkanäle zwischen benachbarten Zellen vorzusehen, die sich an die zu kühlenden Zellen anschmiegen können. Vermutlich ist ein in der US 2015/0 200 429 A1 beschriebener Durchfluss eines Fluids nicht ausreichend, um ein Expandieren eines Kanals zu bewirken, zumindest wenn ein ausreichender Fluiddruck fehlt. Des Weiteren werden in dem US-Dokument Wärmeableiteinheiten vorgeschlagen, die sich mäanderartig zwischen mehreren Zellen hindurchschlängeln. Auch wird vorgeschlagen, Wärmeableiteinheiten auf einer Basisplatte zu montieren, letztere sollen die Zuleit- und Ableitkanäle enthalten. Gemäß eines dritten Ausführungsbeispiels der US 2015/0 200 429 A1 soll die auf der Basisplatte montierte Wärmeableiteinheit einen ausdehnbaren Fluidkanal haben, der sich zwischen zwei steiferen Stützplatten befindet.

Die US 2016/329 538 A1 (Anmelderin: A123 Systems LLC; Veröffentlichungstag: 10.11.2016) beschäftigt sich schwerpunktmäßig mit verschiedenen Ausführungsbeispielen eines Schutzgehäuses (engl. "protective casing") für Batterien wie Lithium-Ionen-Batterien. Jeweils mehrere Batteriezellen einer Batterie können gruppenweise in einem eigenen Schutzgehäuse oder in Schutzkammern eines gemeinsamen Gehäuses eingehaust sein. Ein solches Gehäuse kann innere Kammern aufweisen. In der US-Anmeldung wird vorgeschlagen, Strukturelemente des Gehäuses über Feder-Nut-Rundungen miteinander zu verbinden. Als geeignete Gehäusematerialien werden Plastik, wie Nylon, oder Metall, wie Aluminium oder Stahl, in Betracht gezogen. Eine Relativbewegung der Batterien im Gehäuse soll möglichst verhindert werden. Schaumplatten (engl.: "compliant pads") zwischen den Batterien sollen Stöße abdämpfen sowie Ausdehnungen und Schrumpfungen der Zellen beim Betrieb absorbieren. Hierdurch soll die mechanische Stabilität einer so gestalteten Batterie verbessert werden. Die Zellen sollen mit positiven und negativen Anschlüssen ausgestattet sein, die über Stromleisten z. B. seriell miteinander verbunden sein können. Die Form der Zellen wird als im Wesentlichen flach beschrieben. Außerdem wird vorgeschlagen, das Gehäuse mit extrudierten Bereichen auszustatten, die sich von den End-Wänden weg erstrecken, um deren Oberfläche für eine Verbesserung der Anhaftung (engl.: "adhesion") an das Gehäuse zu vergrößern. Kammer- bzw. segmentartig miteinander zusammengeschlossene bzw. zusammengesteckte Schutzgehäuse mit Batteriezellen können in Batteriegehäuse eingesetzt sein und mit diesen über in Löcher einzusteckende Verbinder aneinandergekoppelt sein.

Manche der untersuchten Druckschriften beschreiben Akkumulatorenpakete, die nur bedingt für den rauen Einsatz in Kraftfahrzeugen geeignet sind. Bei anderen Bauformen wirkt es so, als ob eine mechanische Stabilität durch Komponenten, die eine starke Gewichtszunahme des Akkumulators verursachen, erkauft wird.

### Technische Schwierigkeiten

Es besteht Bedarf nach einem Arrangement von elektrochemischen Zellen, die ausreichend mechanisch stabil ein akzeptabel geringes Gewicht pro gespeicherter Energie aufweisen. Ideal wäre eine Akkumulatorenbauform, die trotzdem eine kurze Ladezeit dank einprägbaren hohen Ladeströmen und damit einhergehender Wärmeentwicklung bieten kann. Anders gesagt, mit dem Ziel, Elektroantriebe erfolgreicher in den Straßenverkehr zu bringen, ist der Wunsch verbunden, bessere Energiespeicher zu schaffen, durch die die bekannten Nachteile, die insbesondere die Einsatzmöglichkeiten in der Form von Vollelektrofahrzeugen begrenzen, zumindest teilweise überwunden werden.

### Erfindungsbeschreibung

Die vorliegende Erfindung löst die erfindungsgemäße Aufgabe durch eine Vorrichtung gemäß Anspruch 1. Auch löst die vorliegende Erfindung die erfindungsgemäße Aufgabe durch einen Herstellungsprozess gemäß dem Anspruch 16. Vorteilhafte Weiterbildungen sind den abhängigen Ansprüchen zu entnehmen.

Traktionsakkumulatoren sind solche elektrochemischen Sekundärzellen, d. h. elektrochemische Zellen, die mehrfach ge- und entladen werden können und die für einen mobilen Einsatz in Fahrzeugen geeignet sind. Besonders interessant sind Traktionsakkumulatoren für Kraftfahrzeuge. Hierzu gehören Personenkraftwagen.

Ein Sekundärzellentyp, der sich durch die Materialien bzw. Ionen, die in den Sekundärzellen verbaut bzw. vorhanden sind, seinen Namen schafft, sind die Lithium-Ionen-Akkumulatoren. Eigentlich wird damit in der Regel eine Material- bzw. lonenangabe zu einer der beiden Elektroden einer Grundzelle einer Sekundärzelle oder zu einem Elektrolyten die namensgebende Angabe. Unter die Kategorie der Lithium-Ionen-Akkumulatoren fällt eine ganze Gruppe chemisch aktiver, folienartiger Halbzellen und hierfür geeigneter Elektrolyten.

Als Referenzbauteile oder als häufig vorhandene Baugruppen enthält eine Lithium-Sekundärbatterie im Allgemeinen eine positive Elektrode, eine negative Elektrode, einen Separator und eine nicht-wässrige Elektrolytlösung, die z. B. Lithiumsalz enthalten kann.

Die elektrochemischen Sekundärzellen des Traktionsakkumulators, die insbesondere Lithium-Ionen-Zellen sind, sind prismatische Sekundärzellen, die gestapelt zueinander angeordnet sind. Nicht nur die Zellen untereinander sind gestapelt, sondern in den Sekundärzellen sind - nach einer vorteilhaften Ausgestaltung - eine erste Elektrode, ein aktiver Bereich des Elektrolyten und eine zweite Elektrode vollflächig, plan und parallel zueinander angeordnet. Durch eine Sekundärzelle kann ein Längsschnitt durchgeführt werden. Wird die Zelle (gedanklich) geschnitten, so kann eine Grundform in den Vordergrund treten, die rechteckig, aber länglich ist. Eine einzelne Sekundärzelle wirkt stabförmig, fast flachstahlähnlich.

Die einzelnen Seiten der Grundform können durch Langseite, Hochseite und Breite bezeichnet werden. Die drei Seiten Langseite, Hochseite und Breite kennzeichnen die Form der Einzelzellen. Die Langseite ist die längste Seite an dem Gehäuse der Sekundärzelle. Im rechten Winkel zur Langseite steht die Hochseite. Die Hochseite hat ebenfalls eine Länge, die auch als Höhe bezeichnet werden kann. Die Grundform hat zwei Langseiten und zwei Hochseiten. Die Langseite ist um ein Mehrfaches länger als die Hochseite. Aufgrund der gestapelten Anordnung der Einzelbauteile der Sekundärzelle kann die Sekundärzelle in Richtung ihrer Breite die geringste Ausdehnung aufweisen. Vorteilhafterweise ist die längste Seite, die an der Grundform festzustellen ist, wenigstens dreimal so lang wie die Hochseite der Grundform. Wird eine aktive Fläche, die durch Langseite und Hochseite begrenzt wird, in der Tiefe, d. h. in der Breite, fortgesetzt, ergibt sich ein erstes Konversionsvolumen einer Einzelzelle. Die aktive Fläche kann auch als Aktivfläche oder auch als aktives Element bezeichnet werden. Die Konversionsvolumina der einzelnen Zellen sind benachbart hintereinander, parallel zueinander platziert. Werden die Konversionsvolumina zusammengesetzt, ergibt sich insgesamt ein Modulvolumen des Traktionsakkumulators. Die einzelnen Konversionsvolumina können durch Gehäuse bzw. einer Wand eines Gehäuses zu den einzelnen Zellen oder Zellpaketen, den Zellengehäusen, unterbrochen sein.

Mehrere Einzelzellen können auch in Serie verschaltet werden, um eine höhere Spannung zur Verfügung zu stellen.

Mehrere Einzelzellen können zusammengefasst werden zu einem Modul bzw. zu einem Akkumulator-(Sub-)Paket. Diese Sekundärzellen können in einem Gehäuse zusammengefasst werden.

Der Schnitt durch die Sekundärzelle, der zur Ableitung bzw. zur Sichtbarkeit der Grundform führt, überstreicht eine Fläche, von der wenigstens 80 % der Gesamtfläche als aktive Fläche nutzbar ist. Durch optimierten Abgleich zwischen Langseite und Hochseite kann eine aktive Fläche geschaffen werden, die wenigstens 92 % der Gesamtfläche der Grundform abdeckt.

Sowohl eine einzelne Zelle kann als auch eine Gruppe von einzelnen Zellen können in einem Gehäuse platziert bzw. zusammengefasst werden. Genauso können auch mehrere, insbesondere in Gehäusen zusammengefasste Zellen wie Zellpakete in einem Modulgehäuse zusammengefasst werden. Ein erster Typ Gehäuse wäre das Zellengehäuse. Ein zweiter Typ Gehäuse wäre das Modulgehäuse. In einem Modulgehäuse können mehrere Zellengehäuse integriert sein.

Ein Gehäuse ist möglichst bauraumeffizient gestaltet. Flächen von Zellen und Gehäusen können sich berühren, wenn die Zellen eng gepackt sind. Vorzugsweise liegen eine Zelle bzw. ein Zellenpaket und ein Gehäuse aneinander an. Hierbei kann eine mehrseitige Flächenberührung bestehen. Die Flächenberührung bleibt beim Betrieb eines Traktionsakkumulators erhalten. Ein mögliches Aufblähen von Zellen, z. B. durch Wärmedehnung, wird somit weitgehend verhindert.

Es darf hervorgehoben werden, dass jede einzelne Sekundärzelle ihr eigenes Gehäuse aufweisen kann. Hierbei können mehrere Sekundärzellen in ihrem (gemeinsamen) eigenen Gehäuse zusammengefasst sein. Die Sekundärzelle bzw. die Einzelzelle ist Teil einer Gruppe von Einzelzellen, die gemeinsam eingefasst sind. Die Sekundärzellen sind in ihrem eigenen Gehäuse eingehüllt. Das Gehäuse schließt dicht an die einzelne oder die mehreren Sekundärzellen an. Die Sekundärzellen stehen in unmittelbarem Kontakt mit der Innenseite des Gehäuses. Obwohl die Gehäuse Bauraum des Modulvolumens in Anspruch nehmen und somit das Aktivvolumen (vordergründig) senken, schaffen die Gehäuse zahlreiche Vorteile: mechanische Stabilität, Planparallelität, günstige Thermik usw. Im Ergebnis bedeutet es, dass die Gehäuse die Nutzung des Modulvolumens steigern können.

Ein Strangpressprofilgehäuse ist aus einem Stangenmaterial herstellbar. Das in eine gewählte Form gepresste Gehäuse ist auf eine gewünschte Länge ablängbar. Damit wird eine Herstellzeit eines Herstellungsprozesses im Vergleich mit einem zusammengeschraubten Gehäuse erheblich verkürzt. Strangpressprofile für Gehäuse könne in beliebiger Länge, quasi endlos, bereitgestellt werden. Die Wände weisen jeweils eine konstante, vorgegebene Dicke auf. Insbesondere sind die Dickenverhältnisse unterschiedlicher Wände, z. B. abhängig von der Anzahl aufzunehmender Sekundärzellen, an die Fläche des erforderlichen Profilquerschnitts präzise anpassbar.

Die beiden offenen Enden des Profils sind nach Bedarf bzw. nach Einführung der Sekundärzellen, z. B. jeweils durch einen Deckel mit, vorzugsweise genau, einem Kontakt, verdeckelbar. Mit Hilfe von Strangpressprofilen sind Gehäuse mit engen Fertigungstoleranzen, also mit gleichbleibender Qualität, herstellbar.

Vorteilhafterweise braucht bei einer Gehäuseeinfassung, bei der ein wesentlicher Teil des Gehäuses aus einem Hohlkörperstrangpressprofil hergestellt ist, nur noch eine erste Abdeckplatte und eine zweite Abdeckplatte hinzugenommen werden, die den Hohlraum zur Aufnahme der Zellen, ggf. in Zellengehäusen, verschließen. In eine solche Abdeckplatte, die in verkürzender Weise auch nur als Platte bezeichnet werden kann, können weitere Elemente und Funktionen eingearbeitet sein, z. B. eine Berstschwächung oder ein Anzeigeelement.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Zur elektrischen Leitung werden wenigstens zwei Polfahnen im Bereich der Hochseiten unmittelbar an den aktiven Flächen bzw. an den aktiven Elementen der Zelle platziert. Ein geeignetes Verfahren zur Herstellung einer elektrischen Verbindung besteht in einem Schweißverfahren. Eine solche Anordnung trägt zur besseren thermischen Gleichverteilung bei.

Nach einem weiteren Aspekt kann bei der einzelnen eingehüllten Sekundärzellenbauform auch das Aktivvolumen optimiert werden. Das Aktivvolumen ist die einzelne aktive Fläche jeder einzelnen Sekundärzelle des Traktionsakkumulators mit der Breite der Innenkomponenten der Sekundärzelle multipliziert. Der Traktionsakkumulator kann in seinen Dimensionen so optimiert werden, dass wenigstens 60 % des Modulvolumens als Aktivvolumen nutzbar sind. Wird das Verhältnis zwischen Langseite, Hochseite und Breite zueinander weiter optimiert, können Modulvolumen von mehr als 62 %, in einigen Ausgestaltungen sogar mehr als 65 % Aktivvolumen am gesamten Modulvolumen (d. h. 60 % bis mehr als 65 % des Modulvolumens) geschaffen werden.

In einer ersten Ausgestaltung kann der kühlende Teil des Gehäuses unter den Sekundärzellen vorgesehen sein und der tragende, verstärkende Teil des Gehäuses oberhalb der Sekundärzellen vorgesehen sein. In einer anderen Ausgestaltung können der tiefste Teil des Gehäuses sowohl die Funktion "Kühlen" als auch die Funktion "mechanische Stabilität" bieten. Der Teil des Gehäuses der oben angeordnet ist, kann als überspannender Teil des Gehäuses bezeichnet werden.

Gibt es mehrere Zellengehäuse, so sind im Inneren der Zellengehäuse die einzelnen Konversionsvolumina zu finden.

Über die Polfahnen und über - im Weiteren angeordnete - elektrische Leitungen kann ein elektrischer Strom im mittleren Bereich, d. h. jeweils im Bereich der Hochseiten quer zur Reaktionsfläche der aktiven Flächen, abgeleitet werden. Die elektrischen Leitungen sind quer zur aktiven Fläche angeordnet.

Der Raum des Modulvolumens unmittelbar benachbart zu den Polfahnen, von denen eine Polfahne ein Pluspol ist und eine Polfahne ein Minuspol ist, kann jeweils für einen Kühlkanal (Zuführkühlkanal und Abführkühlkanal) genutzt werden. Die wärmeproduzierenden aktiven Flächen werden in ihren seitlichen Bereichen mittels Kühlkanäle gekühlt.

Wenigstens zwei Polfahnen sind seitlich an den jeweiligen aktiven Flächen angeordnet. Die beiden Polfahnen befinden sich jeweils eine an einer Hochseite. Die beiden Polfahnen sind an gegenüberliegenden Hochseiten der aktiven Fläche. Als Befestigungstechnik bietet sich die Befestigung über Schweißpunkte an.

Das Gehäuse, insbesondere einer Einzelzelle oder eines ganzen Moduls, kann aus einem Metall gefertigt sein. Metalle, die hierfür in Frage kommen, sind z. B. Aluminium oder Edelstahl oder Messing. Die Gehäuse können aus Aluminium oder Edelstahl gefertigt sein. Aufgrund der Form der Gehäuse ist es möglich, die Metallgehäuse als Strangpressprofile zu fertigen. So ein Strangpressprofil kann auf die Länge bzw. Breitseite der aktiven Flächen hin abgelängt werden.

Die Gehäuse können sehr platzsparend gestaltet werden. Die Gehäuse können so knapp ausgelegt werden, dass die Gehäuse in einem Schnitt nur die aktive Fläche um ca. 2 % nach außen erweitern. Die aktive Fläche hat eine Höhe. 2 % dieser Länge der Höhe entspricht der Dicke des Gehäuses.

Um die Temperatur über die aktiven Flächen möglichst gleichverteilt zu belassen, z. B. trotz einer Schnellladung mittels einem sehr hohen Ladestrom (z. B. dem 3- bis 4-fachen des maximalen Laststroms), können Kühlmaßnahmen ergriffen werden. Die Form der Traktionsakkumulatoren bzw. der Einzelzellen bietet die Möglichkeit, Kühlplatten zwischen zwei Einzelzellen zwischenzusetzen. Muss ausreichend gekühlt werden, kann nach jeder Einzelzelle eine Kühlplatte eingesetzt werden. Solche Kühlplatten können als Sandwich-Kühlplatten realisiert sein. Die Sandwich-Funktion der Kühlplatte ergibt sich aufgrund einer innengeführten Kühlkanalgestaltung. Sandwich-Kühlplatten können z. B. aus einem doppelwandigen Blech geformt werden. Als weitere Möglichkeit steht zur Verfügung, zwei Kunststoffhalbschalen zu nehmen, die geklebt oder geschweißt werden. Hierdurch wird zwischen den Lagen der Kühlplatte ein Hohlraum geschaffen, der mit Kühlmedium durchströmt werden kann. Besonders günstig sind flüssige Kühlmedien, wie z. B. ein Glykol-Wasser-Gemisch oder ein Kältemittel. Die Kühlleistung kann noch zusätzlich gesteigert werden, wenn das Flüssigkühlmedium umgewälzt wird, z. B. über eine Flüssigpumpe für das Glykolgemisch. Die Kühlplatte kann vorteilhafterweise thermische Energie sowohl aus einer Sekundärzelle, die auf einer ersten Seite der Kühlplatte angeordnet ist, als auch aus einer Sekundärzelle, die auf einer anderen Seite der Kühlplatte angeordnet ist, austragen. Die Kühlplatte ist günstigerweise dafür vorgesehen, Wärme aus unterschiedlichen Zellengehäusen zu transportieren.

Der Wärmeaustrag bzw. die Wärmeleistung der Sandwich-Kühlplatte lässt sich steigern, wenn mehr als zwei Kühlkanäle in der Sandwich-Kühlplatte angeordnet sind. Vorteilhafterweise sind die Kühlkanäle in einem mittleren Bereich der Sandwich-Kühlplatte angeordnet. Die Sandwich-Kühlplatte hat zwei oder mehr Kühlkanäle, die vor allem in einem mittleren Bereich, gesehen über die Hochseite der Kühlplatte, längs verlaufen. Die Kühlkanäle erstrecken sich bei dieser Ausführungsform parallel zur Langseite, die von der Form der Grundform bekannt ist.

Es hat sich gezeigt, dass es günstig ist, wenn zwischen zehn (10) und vierzig (40) Sekundärzellen mit ihren jeweiligen aktiven Flächen zusammengefasst werden, um in einem Modulgehäuse oder in einem Zellengehäuse ein Akkumulatorpaket zu bilden. Die Anzahl von Zellen, wie z. B. 20 Zellen, wird durch das Gehäuse wie das Zellengehäuse oder das Modulgehäuse eingespannt. Es findet eine Kompression auf die Einzelzellen statt.

Die jeweiligen Sekundärzellen eines Strangs sind untereinander serienverschaltet. In einem Modulgehäuse befindet sich wenigstens ein Strang mit in Serie verschalteten Sekundärzellen.

Die Sekundärzellen können von einer Trägerplatte unterstützt werden. Als Trägerplatte bietet sich die Bodenplatte des Akkumulatorgehäuses an. Das Modulgehäuse hat eine Platte, die zugleich als Trägerplatte benutzt werden kann. Gleichartig kann auch das Zellengehäuse eine Platte aufweisen, die zur Unterstützung dient.

Die Trägerplatte kann zugleich eine Kühlplatte sein. Der Traktionsakkumulator hat eine thermische Austauschfläche, die von der Trägerplatte angeboten wird. Die Trägerplatte ist jener Teil des Modulgehäuses oder des Zellengehäuses, der dafür bestimmt ist, an der tiefsten Stelle im Fahrzeug verbaut zu werden.

Das Modulgehäuse, genauso das Zellengehäuse kann mit einzelnen Zugelementen realisiert sein, damit die im Innern des Modulgehäuses bzw. im Innern des Zellengehäuses angeordneten Sekundärzellen durch das Modulgehäuse oder des Zellengehäuses komprimiert werden. Auch durch die doppelte Wandung, d. h. die Wandung des Modulgehäuses und die Wandung einer Einzelzelle, kann eine Gesamtkompression mithilfe des E-Moduls des Materials des Gehäuses und des E-Moduls des Materials des Modulgehäuses hergestellt werden. Das Quellen bzw. die Ausdehnung im Zuge von Lade-/Entladezyklen bzw. die Ausdehnung im Zuge von Alterungen bzw. die Ausdehnung im Zuge der Einlagerung von Wasser, das bzw. die durch alle gestapelten Sekundärzellen insgesamt erzeugt wird, kann durch Zugsysteme bzw. Zuganker und/oder durch E-Module von Einfassungen, wie z. B. Gehäusewänden, abgefangen werden.

Das Gehäuse muss nicht über seinen Umfang konstant gehalten sein, sondern das Modulgehäuse und/oder das Zellengehäuse kann/können mit unterschiedlichen Dicken ausgestaltet sein. Z. B. kann die Trägerplatte dicker sein als der Deckel. Gleichartig kann das Gehäuse für die jeweilige Sekundärzelle mit unterschiedlichen Dicken ausgestaltet sein. Hierdurch wird noch weiteres Gewicht gespart.

Die Dicke der einzelnen Seitenwände, Teile und Stege des Gehäuses kann nicht nur auf die mechanischen, statischen und dynamischen Anforderungen ausgelegt sein. Die Dicke kann auf die Funktion der Kühlung abgestimmt sein. Die Seite des Gehäuses, die Wärme speichern und/oder abführen können soll, wird in ihrer Dicke so ausgelegt, dass die Wärme aus den aktiven Flächen der Einzelzellen in den Teil des Gehäuses eingeleitet werden kann. Es ist dabei vorteilhaft, wenn die dickste Seite jene ist, die zugleich als Kühlfläche dient. Wird die Kühlfläche mit der Trägerfläche bzw. Trägerplatte gleich gesetzt, mit anderen Worten, ist die Kühlfläche auch noch die Trägerfläche, so kann die Dicke sowohl in Hinsicht auf mechanische Stabilität als auch in Hinsicht auf ausreichende Kühlleistung optimiert werden. Die Anforderung, ob nun durch die Kühlleistung oder ob nun durch die Stabilität, die die größere Dicke erfordert, bestimmt die Gesamtdicke der Seite.

Die Zellen sind mit mindestens zwei Polfahnen ausgestattet. Polfahnen sind elektrisch leitende Verbindungen, die u. a. der Durchleitung von Strom in eine Zelle oder aus einer Zelle heraus dienen. Eine Elastizität der Polfahnen verringert mögliche mechanische Belastungen der Zellen.

In einer besonders vorteilhaften Weiterbildung, insbesondere für den Fall, dass hohe Verlustenergien, z. B. bei Schnellladevorgängen, aus dem Aktivvolumen herauszubringen sind, kann die Trägerplatte mit Kühlstrukturen ausgestattet sein. Eine mögliche Kühlstruktur ist durch in die Platte eingearbeitete Leitungen für ein Kühlmittel geschaffen. Leitungen, durch die ein Kühlmittel wie Wasser mit oder ohne Zusätzen wie (Poly-)Glykol fließen kann, verlaufen längs in der Trägerplatte. Die Trägerplatte ist an einigen Stellen hohl. Die hohlen Stellen werden von einem Kühlmittel durchflossen. Das Kühlmittel kann anschließend, nachdem es durch die Trägerplatte hindurchgeströmt ist, durch einen Wärmetauscher wieder abgekühlt werden. Die Trägerplatte kann zugleich, wie es ihr Name schon aussagt, als mechanische Unterstützungsstruktur für das Paket aus einzelnen Zellen dienen. Die Trägerplatte übernimmt mehrere Funktionen. Sie hält die Einzelzellen in Lage. Außerdem stützt sie die Gesamtstruktur des Moduls durch eine unten liegende Verstärkung, also der Unterseite. Die Trägerplatte sorgt für eine Versteifung des Traktionsakkumulators im sich verwindenden Chassis eines Kraftfahrzeugs. Die Trägerplatte fördert die Kühlung des Traktionsakkumulators. Je nach Ausgestaltung kann der eine oder der andere Aspekt bzw. die eine oder andere Funktion überwiegen bzw. in den Vordergrund treten.

In einer günstigen Weiterbildung wird das Gehäuse an seinen äußeren Oberflächen profiliert. Solche Profile an einer Seite sind z. B. Lamellen wie Kühllamellen oder Berg-und-Tal-Anordnungen.

Die vorgeschlagene Form eines Traktionsakkumulators zeichnet sich durch hohe Aktivvolumina aus. Auch bietet der vorgestellte Traktionsakkumulator ein günstiges Energiedichte-pro-Gewicht-Verhältnis. Zusätzlich zu einer effizienten Ausnutzung von Bauraum weist der vorgeschlagene Traktionsakkumulator über eine Querschnittsfläche hinweg bei Lade- und Entladevorgängen ein günstiges Temperaturprofil auf. Damit kann die mit hohen elektrischen Strömen einhergehende Wärmeentwicklung zuverlässig bewältigt werden. Auch dieser Aspekt führt zu einer Erhöhung einer Lebensdauer der Traktionsakkumulatoren. Außerdem ist es möglich, ggf. anfallende Abwärme z. B. über einen Fahrzeugwärmetauscher einer Sekundärnutzung zuzuführen und somit die Energieeffizienz des Elektroantriebs noch weiter zu steigern.

Es darf hervorgehoben werden, dass in einer besonders vorteilhaften Ausgestaltung das Gehäuse der einen oder der mehreren Sekundärzellen in Kontakt mit den Sekundärzelle(n) steht. D. h., das Gehäuse kann durchaus auf dem Potential der einen Elektrode liegen. Das Gehäuse ist nicht von der Elektrode der Sekundärzelle getrennt. Das Gehäuse umhüllt die Sekundärzelle(n) in berührender Weise. Über eine Kontaktwärmeabführung erfolgt die Kühlung.

Ein Traktionsakkumulator, insbesondere für ein Kraftfahrzeug wie einen Personenkraftwagen, umfasst gestapelte, prismatische elektrochemische Sekundärzellen, insbesondere mit wenigstens einer Lithium-Ionen-Elektrode und vorzugsweise mit einem nicht-wässrigen Elektrolyten. Die Sekundärzellen haben in einem Schnitt eine rechteckige, längliche Grundform. Die Grundform weist eine wenigstens entlang einer Langseite verlaufende dreifache Länge im Vergleich zu einer entlang einer Hochseite verlaufenden Höhe der Grundform auf. Die Grundform setzt sich in einer Breite zu einem Konversionsvolumen mit parallel zueinander geschichteten, aktiven Elementen fort. Das Volumen ist Teil eines Modulvolumens des Traktionsakkumulators. Eine durch den Schnitt sich ergebende Schnittfläche ist zu wenigstens 80 % eine aktive Fläche, idealerweise zu mehr als 92 % eine aktive Fläche. Auch ist es möglich, dass ein sich aus aktiver Fläche mal Breite ergebendes Aktivvolumen wenigstens 60 % des Modulvolumens beansprucht, idealerweise sogar mehr als 62 % des Modulvolumens beansprucht.

Vorteilhaft schaffen die Gehäuse eine geschlossen umrundende Einfassung eines Akkumulatorpakets. Ein solches Gehäuse kann durch ein Strangpressprofil in der Ausgestaltung hergestellt werden, dass es wenigstens eine von vier Seiten als dickste Seite hat. Die Dicken des Strangpressprofils weichen von Seite zu Seite voneinander ab. Die Dicken betragen zwischen 0,5 mm und 5 mm. Die Seite, die eine Kühlfunktion übernehmen soll, hat z. B. eine Dicke von 2 mm, während die drei anderen Seiten je eine Dicke von 1 mm aufweisen. Genauso ist es möglich, dass die Kühlseite des Strangpressprofils eine Dicke von 4 mm bis 5 mm aufweist, während die anderen Seiten bei Dicken unterhalb von 2 mm verbleiben.

Ein mittlerer Bereich einer aktiven Fläche einer Sekundärzelle ist besonders gut über Polfahnen kühlbar. Eine erste Polfahne ist vorzugsweise an einer ersten Hochseite der Sekundärzelle angeordnet. Eine zweite Polfahne kann an einer zweiten Hochseite der Sekundärzelle angeordnet sein. Vorzugsweise befindet sich an einer Hochseite nur eine einzige Polfahne, wobei insbesondere jede Sekundärzelle mit zwei Polfahnen ausgestattet ist.

Die Polfahne ist möglichst widerstandsfrei, vorzugsweise mit einer elektrisch leitfähigen Kontaktfläche, an die aktive Fläche angeschlossen. D. h., ein Übergangswiederstand sollte bei weniger als 0,1 Ohm pro Quadratzentimeter liegen. Eine gute elektrische Leitfähigkeit, insbesondere der Polfahne, ist zumeist gleichbedeutend mit einer guten thermischen Leitfähigkeit, wie sie bei den meisten metallischen Werkstoffen vorhanden ist. Die Polfahne kann einen Leitungsquerschnitt aufweisen. Besonders vorteilhaft ist eine Polfahne, die in einem Mittenbereich einer Hochseite angeordnet ist. D. h., ein erster Abstand der Polfahne zu einer ersten Langseite und ein zweiter Abstand der Polfahne zu einer zweiten Langseite der Sekundärzelle sollten etwa gleich groß sein. Die Polfahne bietet, anders gesagt, einen Wärmeabflusspfad. Sie dient insbesondere zur Temperaturstabilisierung, d. h. auch als Überhitzungsschutz, im inneren Volumenbereich der Sekundärzelle. Es kann auch von einer homogenisierten Temperaturverteilung, insbesondere entlang einer Hochseite, gesprochen werden, zumal ein Wärmeabfluss über eine Polfahne gleichartig effektiv ist wie ein Wärmeabfluss über eine Zellenwand, die zumeist gegenüber einer aktiven Fläche eine elektrische Isolierschicht aufweist. Ein Vorteil einer homogenisierten Temperaturverteilung besteht u. a. in einer Vergleichmäßigung einer thermischen Ausdehnung der Sekundärzelle.

Nach einem weiteren Aspekt der Vergleichmäßigung bietet eine mittig - bezogen auf eine Höhe der Sekundärzelle - angeordnete Polfahne den Vorteil, dass ein konstanter elektrischer Strom durch eine prismatische Zelle bereitstellbar ist, weil die elektrochemischen Prozesse der Zelle symmetrisch zwischen den Polfahnen ablaufen.

Der erste Leitungsquerschnitt der Polfahne sollte kleiner oder gleich einem zweiten Leitungsquerschnitt sein, der an einer Verbindung, wie einer Litze, der Polfahne zu einem Kontakt vorhanden ist. Der Kontakt bietet eine elektrische Verbindungsstelle aus einem Gehäuse, nämlich einem Zellengehäuse oder einem Modulgehäuse, heraus. Der Kontakt unterstützt eine Wärmeableitung über ein elektrisches Stromverteilernetz.

Ist nun wenigstens eines der Gehäuse durch ein Strangpressverfahren hergestellt, so ist es besonders vorteilhaft, insbesondere aus produktionstechnischer Sichtweise, wenn ein Strangpressprofil zur Schaffung des Gehäuses gewählt wird, das vier Seiten um einen Hohlraum herum bietet und durch seine vier Seiten schon zwei Seiten des einzufassenden Körpers, z. B. der Sekundärzellen (im Falle des Zellengehäuses) oder der Zellengehäuse (im Falle des Modulgehäuses), bestimmen. Das Gehäuse kann z. B. auf die Langseite und die Hochseite einer Sekundärzelle abgestimmt sein. Das Gehäuse kann z. B. auf die Langseite und die Hochseite eines Einzelzellengehäuses abgestimmt sein, die insbesondere den Langseiten und Hochseiten der Sekundärzellen ähneln.

Durch die Gehäusebildung mittels einem Strangpressprofil und ggf. weiteren Platten lässt sich durch wenige Herstellschritte ein Akkumulatorpaket herstellen. Wird das Strangpressprofil hergestellt, kann dieses als so genanntes Endlosprofil hergestellt werden, das zunächst einmal einstückig, zusammenhängend, in der Form einer Hohlschiene vorliegt. Aus dieser länglichen Hohlschiene kann ein Stück abgelängt, z. B. heruntergesägt, werden, das einer Dimension des zu schaffenden Gehäuses entspricht, z. B. der Breite des Zellengehäuses oder des Modulgehäuses.

Der Teil des Gehäuses, der durch das Strangpressprofil gebildet wird, kann als einstückiges, in seinem mittleren Teil hohles Gehäuse ausgestaltet sein. Die reihum eine geschlossene Hülle bildenden Gehäuseseiten sind zusammenhängend ausgestaltet. Diese Teile des Gehäuses sind einteilig. Wenigstens vier Seiten des Gehäuses werden auf einmal durch ein und den gleichen Strangpressvorgang hergestellt.

Vorteilhafterweise werden die Dicken der einzelnen Seiten des Strangpressprofils so ausgestaltet, dass die Masse einer einzelnen Seite des Strangpressprofils eine weitere Funktion übernehmen kann, z. B. Wärme aufnehmen, speichern und ggf. abführen kann oder z. B. die einzelnen Zellen stabilisieren kann.

Das Gehäuse kann bereichsweise in der Form von Ableiterblechen ausgelegt sein, obwohl es vorzugsweise als Strangpressprofil bzw. mit einer durch ein Strangpressverfahren hergestellten Komponente geschaffen sein kann. Einzelne Seiten oder Bereiche können durch Ableiterbleche gebildet sein, die das Ableiten von thermischer Energie fördern. In einer weiteren Ausgestaltung ist es auch möglich, das Strangpressprofil mit einem Ableiterblech zu einem Gesamtgehäuse zu fügen. Das Ableiterblech bildet eine Schicht des mehrschichtigen Gehäuses.

Das kastenförmige Strangpressprofil kann an seinem Ende durch Platten verschlossen werden. Diese Platten sind in dem Strangpressprofil einzusetzen. Z. B. ist die Ausgestaltung möglich, dass die Platten von innen an den Strangpressprofilenden anliegen. In eine solche Platte kann eine Berstschwächung eingearbeitet sein. Dies geht z. B. durch eine Einfräsung eines Bruchschlitzes in die Stirnseite einer der Platten. Der Teil des Gehäuses, der als Strangpressprofil hergestellt ist, überragt an allen vier Seiten die eingelegte Platte. Zwei solcher Platten sind an gegenüberliegenden Seiten eingelegt. Die Platten schauen sich spiegelbildlich an. Zumindest eine der Platten hat eine Berstschwächung, z. B. ein Doppel-Y-Profil. An der Stelle der Berstschwächung kann das Gehäuse sich nach außen auswölben. Der Berstbereich bzw. die Berstschwächung ergibt sich durch eine Perforation oder Eindünnung entlang eines Schnitts, der sich an seinen beiden Enden in zwei 60° abweichend verlaufende Richtungen auffächert. Die Enden des Schnitts, der Verdünnung oder der Perforation geht V-förmig auseinander.

Mehrere Sekundärzellen sind zu einem Sub-Stack zusammengeschlossen. In einer besonders materialsparenden Variante bzw. Ausführungsform, ruht eine der Sekundärzellen mit einer aktiven Fläche an einer der Seiten des Strangpressprofils. Diese zumindest eine Sekundärzelle bestimmt das elektrische Potential des Strangpressprofils. Nur die übrigen aktiven Flächen sind isoliert, z. B. über eingelegte Folien, gegenüber der ersten aktiven Fläche und gegenüber der Oberfläche des Strangpressprofils aufgeschichtet. Weil isolierende Einlegefolien aber nur geringfügig zur Gewichtserhöhung beitragen, schafft eine rundum isolierte Sekundärzelle, die Teil von einem Sub-Stack ist, bei dem alle Sekundärzellen jeweils rundum isoliert eingeschlagen sind, ein leichter zu behandelndes Modul. Soll Material gespart werden, kann auf die Isolierung an zumindest einer Seite zwischen Zellengehäuse und Aktivvolumen verzichtet werden. Soll ein sichereres Modul geschaffen werden, so werden alle Sekundärzellen individuell eingehüllt von einer Isolierung.

In dem Gehäuse können Kanäle eingearbeitet sein. Durch Strangpressen ist es möglich, mit Hilfe geeigneter Dorne Kanäle auszubilden, die einen ovalen Strömungsquerschnitt aufweisen, wobei vorzugsweise eine Schmalseite des Strömungskanalquerschnitts entlang einer Dicke einer Wand des Gehäuses angeordnet ist. Strömungskanäle sind außerdem vorteilhaft, um mit geringerem Materialeinsatz im Vergleich zu einer Vollwand eine ausreichende Tragstabilität zu erzeugen. Günstig für eine passive Wärmeabgabe durch eine Wand hindurch, wenn z. B. ein Kühlmittelfluss unterbrochen ist, sind Kanäle, deren Langseite des Strömungskanalquerschnitts entlang einer Dicke der Gehäusewand ausgerichtet ist. Eine Mehrzahl von Kanälen können nebeneinander angeordnet und durch wärmeleitfähiges Wandmaterial voneinander beabstandet sein.

Unabhängig von dem Querschnitt einer der Seiten des Strangpressprofils hat das Gehäuse unterschiedliche mittlere Dicken. Zu jeder Seite gehört eine mittlere Dicke. Die mittlere Dicke ist die Dicke, die das Gehäuse an der entsprechenden Seite im Maximum aufweist. Von dieser Dicke abweichend, kann die Seitenwand Stellen und Bereiche haben, die noch dünner sind, weil sie z. B. Kanäle aufweisen. Beispielsweise kann eine Trägerplatte eines Gehäuses eine geringere Dicke aufweisen als eine Seitenwand, insbesondere eine Seitenwand an der Kontakte angeordnet sind. Die Dicken der einzelnen Flächenbereiche des Gehäuses können so gestaltet sein, dass das Gehäuse im Bereich jeder Wand eine gleichgroße Wärmekapazität bereitstellt. In einer weiteren Ausgestaltung kann die Dicke einer Wand so ausgelegt sein, dass eine möglichst gleichmäßig verteilte Temperatur auf allen Teilen des Gehäuses herrscht. Nach einem anderen Aspekt ist eine jeweilige Wanddicke gemäß einer richtungsbezogenen, abzuleitenden Wärmemenge skalierbar.

Die Sekundärzellen sind so in dem Gehäuse angeordnet, dass eine per Strangpressverfahren hergestellte Seite eines vier Seiten umfassenden Profils parallel zu der aktiven Fläche einer der Sekundärzellen verläuft. Eine hierzu benachbarte Seite erstreckt sich im 90°-Winkel zu der zur aktiven Fläche parallelen Seite. Das Strangpressprofil wirkt tunnel- oder manschettenartig. Solche Gehäuse können auch als Strangpressprofilgehäuse bezeichnet werden. Durch ein Strangpressprofil, das in einem Profilquerschnitt eine in sich geschlossene Wanderstreckung aufweist, können z. B. einseitig eingetragene Wärmemengen innerhalb weniger Minuten umfänglich verteilt werden. Das Strangpressprofil bildet einen Kühlkörper, weil zwischen den Wänden kein Anschlussbereich und damit kein Wärmeflusswiderstand vorhanden ist. Sekundärzellen, die im Inneren des Strangpressprofils anzuordnen sind, werden vor Temperaturunterschieden, die auf das Gehäuse einwirken können, geschützt. Das Strangpressprofil kann zusätzliche Kühlrippen aufweisen. Nach einem anderen Aspekt sind Sekundärzellen in einem Gehäuse, das ein Strangpressprofil aufweist, besonders gleichmäßig durch ein, insbesondere von einem an einer Seite des Gehäuses angebrachten Heizelement, beheizbar.

Bei einem Strangpressprofilgehäuse kann eine erste Seitenwanddicke z. B. mehr als das Eineinhalbfache, insbesondere mehr als das Doppelte, einer zweiten Seitenwanddicke betragen. Zwei Seitenwände können jeweils eine Dicke haben, die sich um weniger als 50 % und insbesondere mehr als 5 % unterscheidet. Damit ist u. a. eine Optimierung einer erforderlichen Stabilität bei einem gewünschten Maximalgewicht möglich.

In einem Modulgehäuse können Sekundärzellen eines Traktionsakkumulators besonders vorteilhaft zusammengefasst werden. Ein Modulgehäuse für einen Traktionsakkumulator umfasst insbesondere einen Gehäusetorso. Nach einem geometrischen Aspekt kann ein Gehäusetorso auch als ein Gehäusemantelkörper bezeichnet werden. Der Gehäusetorso weist eine Mehrzahl von Seiten, vorzugsweise mindestens vier Seiten, auf, die auch jeweils als Seitenwand bezeichnet werden können. Ein Gehäusetorso ist ein, insbesondere einstückiger, Metallkörper. Wenn vier Seiten des Gehäusetorsos als eine Strangpresseinheit gebildet sind, so ist der Gehäusetorso besonders stabil. Ein Gehäusetorso liegt z. B. als ein nahtloser Verbund von zwei einander gegenüber befindlichen Seitenwandpaaren vor. Eine Seitenwand kann als Trägerplatte dienen. Eine Seitenwand eines Gehäusetorsos kann Boden bzw. Decke des Modulgehäuses sein. Das Modulgehäuse ist dazu ausgestaltet, mindestens eine Sekundärzelle oder mindestens ein Sekundärzellenpaket oder mindestens ein Zellengehäuse in einem Modulgehäuseinnenraum aufzunehmen und vorzugsweise an einer Halterung zu Haltern. Die Halterung kann durch eine zusätzliche Seitenwand, wie eine fünfte Seitenwand und/oder eine sechste Seitenwand gebildet sein. Die Halterung kann u. a. dazu dienen, eine Größe des Innenraums, z. B. durch eine Spannvorrichtung, festzulegen bzw. zu begrenzen. Die Halterung kann einstückig, d. h. einteilig, somit Bestandteil des Gehäuses sein. Eine zusätzliche Anbringung einer Gehäusebefestigung erübrigt sich. Das Modulgehäuse kann mindestens eine Trennwand, insbesondere zur Separierung von Sekundärzellenpaketen, umfassen. Die Trennwand ist vorzugsweise eine Kühltrennwand, in der Kühlkanäle angeordnet sind. Wenn in mindestens einer Seitenwand mindestens ein Kühlkanal vorhanden ist, lässt sich Wärme aus dem Innenraum des Modulgehäuses besonders effektiv, z. B. durch ein Kühlfluid, abführen. Ein Kühlkanal erstreckt sich, insbesondere in einer dicksten Seitenwand, möglichst rechtwinklig zur Wanddicke der Seitenwand. Besonders sicher funktioniert eine Kühlung mit parallel über einen jeweiligen Kühlanschluss durch Kühlfluid versorgten Kühlkanälen, falls eine Verstopfung eines Kanals entstehen sollte.

In einem Modulgehäuse können zusätzliche Elektroniken angeordnet sein. Besonders vorteilhaft ist es, wenn das Modulgehäuse einen Schütz in Modulbauweise, sozusagen ein Schützmodul, mit einschließt. Ein den Sekundärzellen nachgeschaltetes Schützmodul stellt u. a. eine Austauschbarkeit des Traktionsakkumulators sicher. Eine Steuerplatine des Schützmoduls umfasst mindestens eine logische Elektronikschaltung. Eine Steuerlogik bzw. Programmierung des Schützmoduls kann eine elektronische Kennung des Traktionsakkumulators bereitstellen oder auch eine elektronische Kennung des Fahrzeugs, für das der Traktionsakkumulator bestimmt ist, zum Beispiel im Wege eines Vergleichs, abfragen. Eine Betriebssicherheit wird auch verbessert, wenn das Schützmodul eine Kurzschlusssicherung, wie mindestens eine Schmelzsicherung, aufweist, sodass eine Überhitzung des Traktionsakkumulators, insbesondere aufgrund eines gehäuseexternen elektrischen Kurzschlusses bzw. eines gezogenen Kurzschlussstroms unterbindbar ist. Ein Schützmodul kann eine Speichereinheit und eine Prozessoreinheit umfassen. Wenn das Modulgehäuse mit Sensoren für Sekundärzellen, insbesondere Einzelzellen, wie Temperatursensoren oder Kapazitätssensoren, ausgestattet ist, können sensorisch ermittelte Betriebsdaten, insbesondere jeder einzelnen Sekundärzelle, als Zustandsüberwachungsdaten gesichert sowie über das Schützmodul ausgelesen werden. Vorteilhaft ist somit auch ein Modulgehäuse, dessen Schützmodul über eine elektronische Diagnosebuchse an dem Modulgehäuse mit einer Fahrzeugelektronik verbindbar ist.

Eine Sekundärzelle, die in einem Zellengehäuse eingeschlossen ist, ist besonders gut vor äußeren Einflüssen, wie Frost, schützbar. Andererseits kann eine in ein Zellengehäuse eingeschlossene bzw. abgekapselte Sekundärzelle im Falle eines Zellversagens kaum oder gar nicht eine betriebsbereite benachbarte Sekundärzelle beeinträchtigen. Ein Zellengehäuse bzw. Zellengehäuse für einen Traktionsakkumulator umfasst einen Zellengehäusetorso. Ein Zellengehäusetorso ist ein, insbesondere einstückiger, Metallkörper. Unter einem geometrischen Blickwinkel betrachtet, kann ein Zellengehäusetorso auch als ein Zellengehäusemantelkörper bezeichnet werden. Der Zellengehäusetorso weist eine Mehrzahl von Seiten, vorzugsweise mindestens vier Seiten, auf, die auch jeweils als Zellengehäuseseitenwand bezeichnet werden können. Eine Zellengehäuseseitenwand kann als Trägerplatte ausgebildet sein. Eine Seitenwand eines Zellengehäusetorsos kann Boden bzw. Decke des Zellengehäuses sein. Wenn vier Seiten des Zellengehäusetorsos als eine Strangpresseinheit gebildet sind, so ist das Zellengehäuse besonders stabil. Stranggepresste Gehäusetorsos sind in großen Mengen mit konstanter Bemaßung arbeitseffizient herstellbar.

Das Zellgehäuse bzw. Zellengehäuse kann dazu ausgestattet sein, mindestens eine Sekundärzelle oder mindestens ein Sekundärzellenpaket, je nach Größe der Sekundärzellen, in einem Zellengehäuseinnenraum aufzunehmen. Ein Zellengehäuse oder eine Gruppe von Zellengehäusen kann in einem Modulgehäuse verbaut sein. Ein Zellengehäuse ist zusammen mit der (den) darin eingeschlossenen Sekundärzelle(n) eine austauschbare Einheit. Damit wird eine Handhabung der Sekundärzellen, z. B. für den Austausch einer fehlerhaften Sekundärzelle in einem Gehäusemodul, besonders sicher.

Ein Zellengehäuse weist mindestens zwei Kontakte auf, die jeweils für einen Pol vorhanden sind. Die Kontakte sind vorzugsweise zueinander steckkompatibel, sodass einander gegenüberliegende, ungleiche Pole von zwei Zellengehäusen miteinander verbindbar sind. Damit lassen sich besonders kompakte Serienschaltungen über eine Zellengehäuseanordnung erstellen, z. B. um eine gewünschte Betriebsspannung bereitzustellen. In einer solchen Kontaktanordnung ist es für ein möglichst niedriges Gesamtgewicht besonders vorteilhaft, wenn aneinander anschließende Seitenwände von Zellengehäusen eine unterschiedliche Dicke aufweisen, weil eine Stabilität einer dünneren Seitenwand durch gegenseitige Abstützung an einer dickeren Seitenwand gewährleistet ist. Ein Zusammenhalt von zwei oder mehr Zellengehäusen kann noch weiter erhöht werden, wenn die Zellengehäuse an aneinander liegenden Seitenwänden mindestens eine ineinander steckbare Feder/Nut-Ausformung aufweisen. Eine Wärmeüberleitung zwischen den Zellgehäusen wird damit zusätzlich weiter verbessert, sodass alle zusammengefassten Sekundärzellen möglichst gleichmäßig temperierbar sind.

Ein Zellengehäuse ist vorzugsweise mit mindestens einer elektronischen Diagnosebuchse ausgestattet, die auch als Zelldiagnosebuchse bezeichnet werden kann. Über eine Zelldiagnosebuchse ist mindestens ein Sensor und/oder Messfühler, der in einem Zellengehäuseinnenraum an einer Sekundärzelle angeordnet ist, an eine elektronische Überwachungseinheit, wie an ein Schützmodul, anschließbar.

Durch mindestens eine Seitenwand eines Zellengehäuses kann sich mindestens ein Kühlkanal erstrecken. In einer Ausführungsform erstreckt sich der Kühlkanal nicht in den Zellengehäuseinnenraum. Der Kühlkanal liegt vorzugsweise parallel zu mindestens einer Sekundärzelle. Ein Kühlkanal kann dazu dienen, Kühlmittel entlang einer Sekundärzelle fließen zu lassen. Ein Zellengehäusekühlkanal kann an einen Modulgehäusekühlkanal angeschlossen sein. Ein Kühlkanal eines Zellengehäuses kann wie ein Kühlkanal eines Modulgehäuses ausgebildet sein. Eine zusätzliche, vorzugsweise in einer Zellengehäuseseitenwand integrierte, Zellengehäuseheizung kann über einen Tieftemperaturwächter eines Schützmoduls bedarfsgerecht betrieben werden, z. B. um in einem Zellengehäusearray außenliegende Sekundärzellen mit geringem Heizstromverbrauch zu schützen.

Besonders vorteilhaft für eine Abführung von Wärme aus einem Innenraum eines Gehäuses ist es, wenn das Gehäuse eine quaderartige Flachform aufweist. Beispielsweise kann ein Verhältnis einer Breitseite zu einer Hochseite von mehr als drei zu eins vorliegen. Je nach Anordnung der Kontakte, insbesondere bei Polfahnen an den Hochseiten, kann sich auch ein Verhältnis einer Breitseite zu einer Langseite von weniger als eins zu drei als vorteilhaft erweisen.

Die elektrochemischen Sekundärzellen gibt es in vielerlei Bauformen. Eine mögliche Bauform sind die gestapelten, prismatischen Sekundärzellen. Hiervon unterscheiden sich z. B. die weiter oben vorgestellten Pouch-Zellen. Eine weitere Bauform sind die runden Zellen, die vorzugsweise entlang ihrer Mantelflächen parallel zueinander angeordnet, häufig in die gleiche Richtung ausgerichtet, zu einem in einer Ebene angeordneten Paket zusammengeschlossen werden.

Die positive Elektrode einer Lithium-Sekundärbatterie kann beispielsweise durch die folgenden beiden Schritte geschaffen werden:
- erster Schritt: Aufbringen einer Mischung aus einem aktiven Material der positiven Elektrode, einem leitfähigen Mittel und einem Bindemittel auf einen positiven Elektrodenstromkollektor und
- zweiter Schritt: Trocknen der Mischung.

Ergänzend kann der Mischung nach Bedarf ein Füllstoff zugesetzt werden.

Im Folgenden werden gebräuchliche Nomenklaturen zu Kennzeichnung der Zusammensetzung chemisch synthetisierbarer Substanzen hinsichtlich der die Substanzen bildenden Elemente und deren relativer Häufigkeit, insbesondere im Hinblick auf deren Molarität, verwendet. Diese Angaben können auch als chemische Formeln bzw. Summenformeln chemischer Verbindungen bezeichnet werden.

Das aktive Material der positiven Elektrode kann z. B. eines oder mehrere der folgenden sein:
- eine geschichtete Verbindung wie ein Lithiumkobaltoxid (LiCoO₂) oder
- ein Lithiumnickeloxid (LiNiO₂) oder
- eine Verbindung, bei der ein oder mehrere Übergangsmetalle ersetzt sind,
- ein Lithiummanganoxid gemäß einer chemischen Formel Li₁₊ₓMn₂₋ₓO₄ (mit x = 0 bis 0,33) oder
- ein Lithiummanganoxid wie LiMnO₃, LiMn₂O₃ oder LiMnO₂,
- ein Lithiumkupferoxid (Li₂CuO₂;),
- ein Vanadiumoxid wie LiV₃O₃, LiFe₃O₄, V₂O₅ oder Cu₂V₂O₇,
- ein auf Ni basierendes Lithium-Nickel-Oxid, gemäß einer chemischen Formel LiNi₁₋ₓM_{X}O₂ (wobei M = Co, Mn, Al, Cu, Fe, Mg, B oder Ga und x = 0,01 bis 0,3 ist),
- ein Lithium-Mangan-Verbundoxid gemäß einer chemischen Formel LiMn₂₋ₓMₓO₂ (wobei M = Co, Ni, Fe, Cr, Zn oder Ta und x = 0,01 bis 0,1 ist) oder einer chemischen Formel Li₂Mn₃MO₈ (wobei M = Fe, Co, Ni, Cu oder Zn ist),
- LiMn₂O₄, wobei Li in einer chemischen Formel teilweise durch Erdalkalimetallionen ersetzt ist,
- eine Disulfidverbindung oder
- Fe₂(MoO₄)₃.

Leitfähiges Mittel beträgt je nach Zugabe wahlweise 1 bis 30 Gew.-%, bezogen auf das Gesamtgewicht der Verbindung, einschließlich des aktiven Materials der positiven Elektrode. Das leitfähige Mittel soll insbesondere eine hohe Leitfähigkeit aufweisen. Das leitfähige Mittel wird so ausgewählt, dass es keine chemische Veränderung in einer Batterie induziert, auf die das leitfähige Mittel aufgebracht wird. Es eignen sich zum Beispiel
- Graphit, wie natürlicher Graphit oder künstlicher Graphit,
- Ruß bzw. Industrie-Ruß, auch bekannt unter der englischen Bezeichnung "carbon black",
- Spaltruß, wie z. B. Acetylen-Schwarz, Ketjen-Schwarz, Channelruß, insb. Kanal-Schwarz,
- Furnaceruß, wie z. B. Ofen-Schwarz,
- Flammruß, wie z. B. Lampen-Schwarz oder Summer-Schwarz,
- Gasruß,
- leitfähige Faser(n), wie Kohlenstofffaser(n) oder Metallfaser(n),
- metallisches Pulver, wie Kohlenstofffluoridpulver, Aluminiumpulver oder Nickelpulver,
- leitfähige Whisker, wie Zinkoxid oder Kaliumtitanat,
- leitfähiges Metalloxid, wie Titanoxid.

Leitfähige Materialien, wie Polyphenylenderivate, können als leitfähiges Mittel verwendet werden.

Das Bindemittel ist eine Komponente, die die Bindung zwischen dem aktiven Material und dem leitfähigen Mittel und die Anbindung an den Stromkollektor bildet bzw. unterstützt. Das Bindemittel wird im Allgemeinen in einer Menge von 1 bis 30 Gew.-%, bezogen auf das Gesamtgewicht der Verbindung, einschließlich des aktiven Materials der positiven Elektrode, zugegeben. Als Beispiele für das Bindemittel sind zu nennen:
- Polyvinylidenfluorid,
- Polyvinylalkohol,
- Carboxymethylcellulose (CMC),
- Stärke,
- Hydroxypropylcellulose,
- regenerierte Cellulose,
- Polyvinylpyrrolidon,
- Tetrafluorethylen,
- Polyethylen,
- Polypropylen,
- Ethylen-Propylen-Dien-Terpolymer (EPDM),
- sulfoniertes EPDM,
- Styrol-Butadien-Kautschuk,
- Fluorkautschuk und
- verschiedene Copolymere.

Der Füllstoff ist eine optionale Komponente, die verwendet wird, um die Expansion der positiven Elektrode zu hemmen. Es gibt keine besondere Einschränkung für den Füllstoff, solange dieser keine chemischen Veränderungen in einer Batterie verursacht, auf die der Füllstoff aufgebracht wird, und er zumindest ein faseriges Material umfasst bzw. daraus hergestellt ist. Beispiele für den Füllstoff sind Olefinpolymere wie Polyethylen sowie Polypropylen, als faseriges Material bzw. Faserstoffe können z. B. Glasfaser oder Kohlefaser in Betracht kommen.

Die negative Elektrode ist herstellbar, indem ein aktives Material der negativen Elektrode auf einen negativen Elektrodenstromkollektor aufgebracht und getrocknet wird. Die oben beschriebenen Komponenten können wahlweise selektiv zu dem aktiven Material der negativen Elektrode hinzugefügt werden, um deren Eigenschaften weiter zu verbessern.

Als aktives Material der negativen Elektrode kann beispielsweise Kohlenstoff verwendet werden, wie z. B. nicht-graphitisierender Kohlenstoff oder ein Kohlenstoff auf Graphitbasis, ein Metall-Verbundoxid ist verwendbar, wie LiₓFe₂O₃ (0 ≦ x ≦ 1), LiₓWO₂ (0 ≦ x ≦ 1), SnₓMe_{1.x}Me'_{y}O_{z} (Die Komponenten sind z. B. mit einer Auswahl aus dem folgenden näher bestimmbar: Me als Mn, Fe, Pb, Ge; Me ' als Al, B, P, Si, Gruppe 1, 2 und 3 Elemente des Periodensystems, Halogen; 0 ≦ x ≦ 1; 1 ≦ y ≦ 3; 1 ≦ z ≦ 8), geeignet sind auch Lithiummetall, Lithium-Legierungen, Legierungen auf Siliciumbasis, Legierungen auf Zinnbasis, Metalloxide, wie SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ oder Bi₂O₅, leitfähiges Polymer, wie Polyacetylen, oder ein Li-Co-Ni-basiertes Material.

Damit lassen sich für jeweils gewünschte Anwendungsfelder geeignete Materialien miteinander kombinieren, um die Elektroden besonders effizient zu gestalten.

Der Separator ist zwischen der positiven Elektrode und der negativen Elektrode angeordnet. Als Separator kann beispielsweise ein isolierender Dünnfilm mit hoher lonenpermeabilität verwendet werden. Vorzugsweise weist der Dünnfilm eine hohe mechanische Festigkeit auf. Der Separator kann in bevorzugten Ausführungen wahlweise einen Porendurchmesser von 0,01 µm bis 10 µm aufweisen. Besonders vorteilhaft ist eine Dicke des Separators wahlweise zwischen 5 µm bis 300 µm. Als Material für den Separator ist beispielsweise ein Olefinpolymer verwendbar. Das Material kann als ein Blatt oder als ein Vliesstoff bereitgestellt werden. Besonders vorteilhaft ist Polypropylen, das chemische Beständigkeit und Hydrophobie aufweist. Günstige Eigenschaften für den Separator bieten Glasfaser(n) oder Polyethylen. In Ausführungsbeispielen, in denen ein Festelektrolyt, wie ein Polymer, als Elektrolyt verwendet wird, kann der Festelektrolyt auch als Separator fungieren.

Die nicht-wässrige Elektrolytlösung mit Lithiumsalz umfasst eine polare organische Elektrolytlösung und mindestens ein Salz des Lithiums. Als elektrolytische Lösung kann eine nicht-wässrige flüssige Elektrolytlösung, ein organischer Festelektrolyt oder ein anorganischer Festelektrolyt verwendet werden. Der Elektrolyt kann chemisch unterschiedliche Bestandteile aufweisen

Als Beispiele für die nicht-wässrige flüssige Elektrolytlösung können nicht-protische organische Lösungsmittel wie N-Methyl-2-pyrrolidinon, Propylencarbonat, Ethylencarbonat, Butylencarbonat, Dimethylcarbonat, Diethylcarbonat, gamma-Butyro-Lacton, 1,2-Dimethoxyethan, Tetrahydroxy-Franc, 2-Methyltetrahydrofuran, Dimethylsulfoxid, 1,3-Dioxolan, Formamid, Dimethylformamid, Dioxolan, Acetonitril, Nitromethan, Methylformiat, Methylacetat, Phosphorsäuretriester, Trimethoxymethan, Dioxolanderivate, Sulfolan, Methylsulfolan, 1,3-Dimethyl-2-imidazolidinon, Propylencarbonatderivate, Tetrahydrofuranderivate, Ether, Methylpropionat sowie Ethylpropionat genannt werden.

Als Beispiele für geeignete organische Festelektrolyte können Polyethylenderivate, Polyethylenoxidderivate, Polypropylenoxidderivate, Phosphorsäureesterpolymere, Polyreaktionslysin, Polyestersulfid, Polyvinylalkohole, Polyvinylidenfluorid und Polymere mit ionischen Dissoziationsgruppen genannt werden.

Als Beispiele für geeignete anorganische Festelektrolyten können Nitride, Halogenide oder Sulfate von Lithium (Li) mit gebräuchlichen chemischen Kurzbezeichnungen für deren Zusammensetzung wie Li₃N, Lil, Li₅Nl₂, Li₃N-Lil-LiOH, LiSiO₄, LiSiO₄-Lil-LiOH, Li₂SiS₃, Li₄SiO₄, Li₄SiO₄-Lil-LiOH und Li₃PO₄-Li₂S-SiS₂ genannt werden.

Das Lithiumsalz ist ein Material, das in den oben erwähnten nicht-wässrigen Elektrolyten leicht löslich ist. Das Lithiumsalz kann beispielsweise eines oder mehrere der folgenden umfassen: LiCI, LiBr, Lil, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, Chlorboranlithium, niederes aliphatisches Carbonsäurelithium, Lithiumtetraphenylborat und Imidoverbindungen.

Mit einer Auswahl aus den genannten Materialien für Elektrolyten lässt sich der Elektrolyt besonders gut auf das gewählte Elektrodenmaterial einstellen. Hierdurch sind gute Betriebseigenschaften, wie günstige Lade-/Entladecharakteristiken für Akkus bzw. elektrische Energiespeicherzellen, einstellbar.

Zusätzlich können zur weiteren Verbesserung der Ladungs- und Entladungseigenschaften sowie als Flammschutzmittel beispielsweise Pyridin, Triethylphosphit, Triethanolamin, cyclischer Ether, Ethylendiamin, n-Glyme, Hexaphosphorsäuretriamid, Nitrobenzolderivate, Schwefel-, Chinoniminfarbstoffe, N-substituiertes Oxazolidinon, N, N-substituiertes Imidazolidin, Ethylenglykoldialkylether, Ammoniumsalze, Pyrrol, 2-Methoxyethanol, Aluminiumtrichlorid oder vergleichbares der nicht-wässrigen Elektrolytlösung zugesetzt werden. Unter Umständen kann die nicht-wässrige Elektrolytlösung für die Eigenschaft der schweren Entflammbarkeit zusätzlich halogenhaltige Lösungsmittel wie Tetrachlorkohlenstoff und Ethylentrifluorid enthalten. Weiterhin kann zur weiteren Verbesserung der Hochtemperatur-Beständigkeit die nicht-wässrige Elektrolytlösung zusätzlich Kohlendioxidgas enthalten.

### Figurenkurzbeschreibung

Die vorliegende Erfindung kann noch besser verstanden werden, wenn Bezug auf die beiliegenden Zeichnungen genommen wird, wobei
Figur 1 eine seitliche Ansicht einer Einzelzelle in einem Zellengehäuse mit einem (sichtbaren) Kontakt zeigt,
Figur 2 eine Einzelzelle aus einer im 90°-Winkel querverlaufenden Perspektive (im Vergleich mit Figur 1) mit einem Zellengehäuse, dargestellt durch schematische Umrisse, zeigt,
Figur 3 einen Schnitt A - A durch die Einzelzelle nach Figur 1 zeigt,
Figur 4 Außenumrisse einer Einzelzelle mit ihrem Zellengehäuse zeigt,
Figur 5 einen Stapel wechselweise gegensätzlich zueinander orientierter Einzelzellen zur Bildung eines Moduls zeigt,
Figur 6 eine erste Ausführungsform eines Moduls zeigt,
Figur 7 eine zweite Variante eines Moduls zeigt,
Figur 8 das Modul aus Figur 7 aus einer Perspektive von oben zeigt,
Figur 9 das Modul nach Figur 7 in einer teilgeöffneten Darstellung zeigt,
Figur 10 eine weitere Ausführungsform einer Einzelzelle im Modulgehäuse zeigt,
Figur 11 eine Kühlplatte in einem Modulgehäuse zeigt,
Figur 12 eine Ausführungsvariante eines Stapels zeigt, der sich aus Einzelzellen wie den in
Figur 10 gezeigten, zusammensetzen kann,
Figur 13 ein Gehäuse eines Moduls in einer weiteren Variante von oben zeigt,
Figur 14 ein Modulgehäuse in einer weiteren Variante in einer isometrischen Darstellung zeigt,
Figur 15 ein teilgeöffnetes Modul zeigt, das z. B. aus dem Inneren des Gehäuses nach Figur 13 stammen kann,
Figur 16 ein Einzelzellengehäuse mit einer "Berstscheibe" bzw. einer Berstfuge zeigt,
Figur 17 einen Traktionsakkumulator mit Modulgehäuse einer weiteren Ausführungsform mit einer flüssigkeitsgekühlten Trägerplatte zeigt,
Figur 18 einen inneren Teil des Traktionsakkumulators nach Figur 17 zeigt,
Figur 19 einen Ausschnitt aus der Darstellung nach Figur 18 zeigt,
Figur 20 einen Traktionsakkumulator mit Modulgehäuse einer weiteren Ausführungsform, nämlich mit einer Flüssigkeitskühlung, zeigt und
Figur 21 den Traktionsakkumulator nach Figur 20 mit entferntem Strangpressprofilteil des Modulgehäuses zeigt.

### Figurenbeschreibung

Figur 1 zeigt eine erste Ausführungsform einer Einzelzelle 53 mit ihrem Zellengehäuse 31, an dem der erste Kontakt 47 angebracht ist. Solche Einzelzellen wie die Einzelzelle 53 können aufeinander geschichtet einen Traktionsakkumulator wie den Traktionsakkumulator 1^{II} nach Figur 9 bilden. Jede Einzelzelle 53 hat eine Breite 11, die durch die Breite des Zellengehäuses 31 bestimmt ist. Die Form der Einzelzelle 53 und damit die Form des Zellengehäuses 31 ist, wenn von der in Figur 1 dargestellten seitlichen Ansicht auf das Zellengehäuse 31 geblickt wird, länglich und hochkant. Wird die Einzelzelle 53 entlang der in Figur 1 dargestellten Schnittlinie A-A geschnitten, so ergibt sich die in Figur 3 dargestellte Schnittzeichnung des Zellengehäuses 31. Die Breite 11 ist schmaler als die Länge 15 der Hochseite 9.

Figur 2 zeigt das Zellengehäuse 31 von einer Frontansicht der Einzelzelle 53. In dieser Ansicht ist gut die Grundform 5 der Einzelzelle 53, bedingt durch die Abmessungen des Zellengehäuses 31, zu erkennen. Die Grundform 5 ist eine balkenartige, längliche, rechteckige Form. Die Langseite 7 ist länger als die Hochseite 9. Die Kontakte 47, 49 sitzen seitlich, am Rande des Zellengehäuses 31. Die Kontakte 47, 49 begrenzen die Hochseiten 9 zu jedem Ende des Zellengehäuses 31. Das bedeutet, dass bei der prismatischen Zellenform der Einzelzelle 53 zwei Kontakte 47, 9 vorhanden sind, jeweils ein Kontakt 47, 49 an seiner Hochseite 9. Die prismatische Zellenform der Einzelzelle 53 hat zwei Hochseiten 9. Die Kontakte 47, 49 sitzen außermittig platziert auf der Länge 15 der Hochseite 9.

Wie gesagt, wird das Zellengehäuse 31 nach Figur 2 ungefähr in der Mitte seiner Breite 11 (s. Figur 1) geschnitten (Schnittlinie A-A), ergibt sich eine (vereinfachte schematische) Ansicht nach Figur 3. Das Zellengehäuse 31 fasst durch seine Grundform 5 in rechteckiger Weise die Aktivfläche 19 ein. Das Zellengehäuse 31 stellt die Begrenzung dar und grenzt gegenüber dem äußeren bzw. nach Außen 51 ab. Die Aktivfläche 19 wird durch das Zellengehäuse 31 gegenüber Außen 51 begrenzt. Die Aktivfläche 19 hat eine Länge 13, die ein Vielfaches der Höhe 15 beträgt. Die Länge 13 der Langseite 7 wird durch die Kontakte 47, 49 nach Außen 51 verlängert. Die Kontakte 47, 49 befinden sich an den Hochseiten 9. Das Gehäuse 31 der Zellen weist unterschiedliche Dicken 69, 69^{I} auf.

In Figur 4 ist das Zellengehäuse 31 der Einzelzelle 53 mit ihren Kontakten 47, 49 als schmaler, länglicher, rechteckiger, den aktiven Bereich einfassender Kasten dargestellt. Ein Teil des Konversionsvolumens 21 wird von jeder einzelnen Einzelzelle 53 zur Verfügung gestellt. Wird die aktive Fläche 19 (siehe Figur 3) in die Breite 11 (vgl. Figur 1) verlängert, so ergibt sich das (Gesamt-)Konversionsvolumen 21. Durch die planparallele Anordnung der Elektroden und des Elektrolyten über die gesamte aktive Fläche 19 hinweg, ist das Innenvolumen des Zellengehäuses 31 mit dem Konversionsvolumen 21 der Einzelzelle 53 nahezu vollständig ausgefüllt. Dadurch lassen sich Aktivvolumina von wenigstens 60 % (bezogen auf das Gesamtvolumen des Traktionsakkumulators 1 (vgl. Figur 5)) herstellen. Bei einem Verhältnis von mehr als 3 zwischen Langseite 7 und Hochseite 9 (s. Figuren 2 und 3) können sogar Aktivvolumina von mehr als 62 %, idealerweise sogar mehr als 65 % geschaffen werden.

Figur 5 zeigt ein Modulgehäuse 33 mit den beiden Sammelstromleitern 55, 57. Die Sammelstromleiter 55, 57 des Traktionsakkumulators 1 sitzen an der ersten und an der letzten Einzelzelle der Einzelzellen 53, 53^{I}, 53^{II}. Die einzelnen Zellengehäuse 31, 31^{I}, 31^{II} sind mit ihren Flächen, gebildet aus Langseite und Hochseite (vgl. Figur 3), aufeinander gestapelt, um den Traktionsakkumulator 1 zu bilden. Die Einzelzellen 53, 53^{I}, 53^{II} ruhen auf der Trägerplatte 45.

Nach dem Sammelstromleiter 57 sind die Sekundärzellen 3, 3^{I}, 3^{II}, 3^{III} aufgeschichtet, eine an der anderen anliegend, vorhanden.

Figur 6 zeigt eine Schnittansicht durch eine weitere Ausführungsform eines Traktionsakkumulators 1^{I}. Der Traktionsakkumulators 1^{I} kann anhand seiner Montageschienen, wie der Montageschiene 59 und der Montageschiene 59^{I}, an einem Fahrzeugchassis, z. B. im Unterfloorbereich, befestigt werden. Der Begriff Unterfloorbereich bezeichnet den Bereich für eine Bodengruppe eines Kraftfahrzeugs (nicht dargestellt). Eine Modulgehäuseseitenwand 61 weist die ununterbrochene bzw. einstückig durchgängige Montageschiene 59 auf. Die paarweise parallel zueinander vorhandenen Montageschienen 59, 59^{I} bilden nach Art von T-Trägern eine strukturelle Versteifung des Traktionsakkumulators 1^{I}, z. B. zur Abstützung von Verspannungselementen für Einzelzellen, wie Zugelementen oder Druckelementen, die im Inneren eines Modulgehäuse 33 vorhanden sind. Nach einem weiteren Aspekt ist die Montageschiene 59 kühlrippenartig ausgebildet. Im eingebauten Zustand des Modulgehäuses 33 wird eine Wärmeableitung von dem Modulgehäuse 33 zur Bodengruppe eines Fahrzeugs bzw. dem Fahrzeugchassis (nicht dargestellt) gefördert. Die Montageschiene 59, 59^{I} kann auch als eine (erste) Wärmeableitungsbrücke des Modulgehäuses 33 bezeichnet werden. Das Modulgehäuse 33 setzt sich aus plattenartigen Elementen zusammen. Das Modulgehäuse 33 hat einen Modulgehäuseboden 63, an dem sich die Modulgehäuseseitenwand 61 anschließt. Das Modulgehäuse 33 wird von dem Modulgehäusedeckel 65 nach oben begrenzt. Die Aktivfläche 19 wird von ihren Polfahnen 25, 27 seitlich abgeschlossen. Es kann auch gesagt werden, dass die Polfahnen 25, 27 der Aktivfläche 19 seitlich zugeordnet sind bzw. dass die Polfahnen 25, 27 an seitlichen Bereichen der Aktivfläche 19 vorhanden sind. Die Aktivfläche 19 kann eine Potentialdifferenz zwischen den Polfahnen 25, 27 bereitstellen. Die Polfahnen 25, 27 befinden sich im mittleren Bereich 17, 17^{I} der aktiven Fläche 19. Die erste Polfahne 25 geht in den ersten Kontakt 47 über. Die zweite Polfahne 27 geht in den zweiten Kontakt 49 über. Seitlich an den Aktivflächen 19 der Einzelzellen 53, 53^{I}, 53^{II} (s. Figur 5) schließen sich die einzelnen Kontakte 47, 49 an. Ein flächendeckender Anschluss der Polfahne 25, 29 an den jeweilig zugeordneten Kontakt 47, 49 bildet einen Stromdurchleitquerschnitt. Auf diese Weise wird ein Durchleitwiderstand, insbesondere für Strom und Wärme, möglichst gering gehalten. Die Montageschiene 59 befindet sich an der Modulgehäuseseitenwand 61 in einem oberen Bereich 62 der Modulgehäuseseitenwand 61. Der obere Bereich 62 befindet sich näher bei dem Modulgehäusedeckel 65 als bei dem Modulgehäuseboden 63. Die Montageschiene 59 kann z. B. als Verzweigung oder als Falte der Modulgehäuseseitenwand 61 ausgebildet sein. Nach einem anderen Gesichtspunkt ist die Montageschiene 59 näher bei den Kontakten 47, 49 angeordnet als bei der Austauschfläche 71. Dadurch kann Wärme von Kontakten 47, 49 besser weggeleitet werden. In der gleichen Dimension wie die Langseite 7^{I} sich erstreckt, erstreckt sich die Austauschfläche 71 in ihrer längsten Erstreckung. Die Austauschfläche 71 und der Modulgehäuseboden 63 sind bei dem Traktionsakkumulator 1^{I} identisch. Die Hochseite 9^{I} steht senkrecht auf der Langseite 7^{I}. Die Anordnung senkrecht zueinander bezieht sich auf einen Einbauzustand. Als Alternative kann auch von einer rechtwinkligen Stellung zueinander gesprochen werden, wodurch eine besonders raumsparende Packung ermöglicht wird.

In dem Modulgehäuse 33 befinden sich Konvektionskanäle 77, 77^{I}, in denen die Strömung eines Kühlmittels, wie Luft, durch Erwärmung gefördert wird. Konvektionskanäle 77, 77^{I} unterstützen eine Abführung von Wärme, insbesondere von den Kontakten 47, 49. Ein erster Konvektionskanal 77 ist zwischen einer Innenseite 73 der ersten Modulgehäuseseitenwand 61 und der Aktivfläche 19 angeordnet. Ein zweiter Konvektionskanal 77' ist vor einer Innenseite 73^{I} einer zweiten Modulgehäuseseitenwand 61^{I} vorhanden. Durch eine gleichseitige Wärmeabfuhr wird ein Temperaturgradient an bzw. zwischen den mittleren Bereichen 17, 17^{I} zumindest entschärft bzw. abgeflacht. Für einen Betriebszustand ungünstige Temperaturspitzen werden vermieden.

Abstandshalter 93, 93^{I}, die zwischen der Aktivfläche 19 und den Modulgehäuseseitenwänden 61, 61^{I} angeordnet sind, ermöglichen eine gleichmäßige Positionierung von Einzelzellen in dem Modulgehäuse 33. Außerdem können Abstandshalter 93, 93^{I} als zweite Wärmeleitungsbrücken 93, 93^{I} ausgebildet sein und insbesondere einen hohen Wärmeleitungskoeffizienten aufweisen. Damit wird eine Ableitung von Wärme, insbesondere aus den mittleren Bereichen 17, 17^{I} der Aktivfläche 19 einer jeweiligen Einzelzelle 53 (vgl. Figur 5), noch weiter verbessert. In weiteren vorteilhaften Ausführungsformen können Abstandshalter als elektrische oder auch thermische Kontaktierungen ausgebildet sein. Es ist auch möglich, einen oder mehrere Abstandshalter jeweils als Strömungsleitblech, insbesondere als Teil eines Kanals, wie einen Konvektionskanal 77, 77' oder einen Kühlkanal, oder als Teil einer Kühlkanalkammer auszubilden.

Wird eine zusätzliche Kühlung durch einen Konvektionskanal 77, 77^{I} nicht benötigt, so kann in einer weiteren Ausführungsvariante ein für den Konvektionskanal 77, 77^{I} vorgesehener Raum bzw. eine Kammer in dem Modulgehäuse 33 durch einen aufquellenden Polymerschaum ausgefüllt sein. Wenn ein Füllstoff, wie Polymerschaum, zwischen den Modulgehäuseseitenwänden 61, 61^{I} und der Aktivfläche 19 vorhanden ist, werden Amplituden von niederfrequenten Schwingungen im akustischen (Frequenz-)Bereich, insbesondere unterhalb von wenigen kHz (z. B. 5 kHz), gut gedämpft. Eine bei besonderen Fahrsituationen mögliche mechanische Belastung der Aktivfläche 19 durch Fahrzeugschwingungen wird weiter vermindert.

In Figur 7 ist ein Traktionsakkumulator 1^{II} in 3D-Darstellung zu sehen. So wie der Traktionsakkumulator 1^{I} (nach Figur 6) von dem Modulgehäusedeckel 65 nach oben begrenzt ist, wird der Traktionsakkumulators 1^{II} aus Modulgehäuseseitenwand 61^{I}, Modulgehäuseboden 63^{I}, Modulgehäusedeckel 65^{I} und Modulgehäuserückwand 67, 67^{I} zusammengesetzt. Außen am Rand verläuft die Montageschiene 59^{II}. Auf der gegenüberliegenden Seite zu der Seite mit der ersten Montageschiene 59^{II} ist die zweite Montageschiene 59^{III} angeordnet. Auf einer Oberseite des Traktionsakkumulators 1^{II-}, d. h. im Bereich des Modulgehäusedeckels 65^{I}, befinden sich Konvektionsausströmöffnungen 79, 79^{I}, wie eine erste Konvektionsausströmöffnung 79 und eine zweite Konvektionsausströmöffnung 79^{I}. Das Gehäuse aus Modulgehäuseseitenwand 61^{I}, Modulgehäuseboden 63^{I} und Modulgehäusedeckel 65^{I} ist profiliert, um Aussparungen, Vertiefungen und Öffnungen anzubieten. Konvektionseinströmöffnungen, wie eine erste Konvektionseinströmöffnung 75, befinden sich als Durchgänge bzw. Eingänge für Luft in dem Modulgehäuseboden 63^{I}. In dem Ausführungsbeispiel von Figur 7 ist eine Konvektionseinströmöffnung 75 mittig zwischen zwei Konvektionsausströmöffnungen 79, 79^{I} in einem Bereich des Modulgehäusebodens 63^{I} angeordnet. Die Durchströmung des Traktionsakkumulators 1^{II} mit Kühlmittel, wie Luft, erfolgt somit bidirektional durch einen verzweigten Konvektionskanal im Inneren des Traktionsakkumulators 1^{II} (deshalb in Figur 7 nicht einsehbar) jeweils in entgegengesetzte Richtungen. Dadurch wird Wärme besonders effizient abgeführt.

Kontaktstellen 81, 81^{I} für einen externen Anschluss sind, wie in Figur 7 gezeigt ist, jeweils in einer Aussparung des Modulgehäusedeckels 65^{I} für eine Stromentnahme zugänglich. Die Kontaktstellen 81, 81^{I} sind jeweils durch eine verstellbare Abdeckung 83, 83^{I}, die in Figur 7 zur besseren Übersicht in einem teilgeöffneten Zustand gezeigt ist, vor zufälliger bzw. unbeabsichtigter Kontaktierung geschützt. Die Befestigung des Traktionsakkumulators 1^{II} findet über Montageschienen 59^{II}, 59^{III} statt, die ein öhrchenartiges Aussehen haben. Mit anderen Worten, die Montageschienen sind wie kleine rechteckige Plättchen. Die Montageschienen 59^{II}, 59^{III} sind in wiederholender Weise an der Seite wie der Seite 61^{I} angebracht. Die erste Montageschiene 59^{II} und die zweite Montageschiene 59^{III} ermöglichen eine präzise Zuführung der externen Kontaktstellen 81, 81^{I} zu den elektrischen Anschlussstellen an einem Fahrzeug (nicht gezeigt). Eine einander gegenüber liegende Anordnung der ersten Kontaktstelle 81 und der zweiten Kontaktstelle 81^{I} an dem Traktionsakkumulator 1^{II}, insbesondere im Bereich der Modulgehäuserückwand 67, 67^{I}, erleichtert den Einbau in das Fahrzeug. Die Montageschienen 59^{II}, 59^{III} bilden einen Gegenpol zu den gleichpoligen Kontaktstellen 81, 81^{I}.

Mit anderen Worten, es findet eine elektrische Verbindung über das Modulgehäuse statt.

Wie in Figur 8 durch die Ansicht von oben zu sehen ist, bilden die (aus Figur 7 bekannten) Einzelteile Modulgehäuseseitenwand 61^{I}, Modulgehäuseboden 63^{I}, Modulgehäusedeckel 65^{I} und Modulgehäuserückwand 67, 67^{I} ein Modulvolumen 23. Das Modulvolumen 23 umfasst einen (nahezu) quaderförmigen, rechteckigen, länglichen, länger als breiter, breiter als höher umfassenden Raum, der durch die Grundform 5 (s. Figur 3) bestimmt ist. Zwischen den beiden Modulgehäuserückwänden 67, 67' des Traktionsakkumulators 1^{II} sind die Konvektionsausströmöffnungen 79, 79^{I} platziert, zu denen der Konvektionskanal 77^{I} die Wärme aus dem Inneren des Traktionsakkumulators 1^{II} austrägt.

In Figur 9 wird der Traktionsakkumulator 1^{II} nach Figur 7 in einer halbgeöffneten Variante dargestellt, wodurch die Anordnung der Einzelzellen 53, 53^{I}, 53^{II} zu sehen ist. Die Einzelzellen 53, 53^{I}, 53^{II} weisen jeweils unter anderem eine Modulgehäusedeckelanschlussfläche 85, 85^{I}, 85^{II} auf, die jeweils ebenflächig bzw. planar ausgebildet sind. Eine Wärmeleitungsverbindung der Deckelanschlussflächen 85, 85^{I}, 85^{II} mit dem Modulgehäusedeckel 65^{I} (siehe Figur 8) ist ausbildbar. Besonders günstig für eine Ableitung von Wärmeleistung von den Einzelzellen 53, 53^{I}, 53^{II} ist es, wenn zwischen Modulgehäusedeckel 65^{I} und den Modulgehäusedeckelanschlussflächen 85, 85^{I}, 85^{II} noch eine Ausgleichsmasse (nicht dargestellt), wie ein Wärmeleitkleber oder eine Graphitpaste, vorhanden ist, die einen hohen Wärmeleitungskoeffizient, z. B. in der Größe des Wärmeleitungskoeffizienten eines metallischen Leiters, vorzugsweise von mehr als 1 W/(m*K) (ein Watt pro Meter mal Kelvin), aufweist. Eine Dicke der Ausgleichsmasse beträgt vorzugsweise weniger als 1 mm. Die Ausgleichsmasse kann z. B. auf den Modulgehäusedeckel 65^{I} (siehe Figur 8) oder den Modulgehäuseboden 63^{I} (siehe Figur 9) aufgesprüht, ausgegossen, aufgewalzt oder aufgeklebt werden. Mit Hilfe eines Anpressdrucks ist ein Abstand zwischen dem Modulgehäusedeckel 65^{I} und den Modulgehäusedeckelanschlussflächen 85, 85^{I}, 85^{II} minimierbar. Anders gesagt ist auch der Modulgehäuseboden 63^{I} in entsprechender Weise mit den Einzelzellen 53, 53^{I}, 53^{II} wärmeleitend verbindbar. Der Modulgehäusedeckel 65^{I} (siehe Figur 8) sowie der Modulgehäuseboden 63^{I} können eine Blechstärke von 1 mm bis 3 mm, vorzugsweise 2 mm, aufweisen. Die jeweiligen Bleche bzw. Platten überragen die Einzelzellen, wie die Einzelzellen 53, 53^{I}, 53^{II}, seitlich. Damit werden ein ebener, vollflächiger Anschluss und insbesondere eine gute Wärmeabführung von den Einzelzellen 53, 53^{I}, 53^{II} ermöglicht. Die Ausgleichsmasse kann auch als eine Wärmeleitungsbrücke bezeichnet werden. So lassen sich alle Einzelzellen des Traktionsakkumulators 1^{II}, wie die Einzelzellen 53, 53^{I}, 53^{II}, besonders gut passiv kühlen. Es können also als Kühlungsvarianten Bodenkühlung, Deckelkühlung sowie eine Kombination von beidem - je nach Leistungsanforderung - ausgebildet sein. Die Einzelzellen 53, 53^{I}, 53^{II} sind geschichtet nebeneinander entlang der Modulgehäuseseitenwand 61^{I}, eine neben der anderen auf dem Modulgehäuseboden 63^{I} arrangiert. Die vorhandenen Einzelzellen, wie die Einzelzellen 53, 53^{I}, 53^{II}, formen (im Wesentlichen) das Modulvolumen 23.

Damit die Einzelzellen 53, 53^{I}, 53^{II} besonders gute, d. h. großflächige Kontaktflächen haben (d. h. unter einander bzw. zwischen ihnen), sollten die Einzelzellen 53, 53^{I}, 53^{II} unter mechanischer Spannung mit einander gefügt worden sein. Die mechanische Spannung sollte nach dem Fügen nicht nachlassen. Aufgrund der Eigenart von Lithium-Ionen-Zellen im Laufe ihrer Betriebszeit in der Dicke zuzunehmen, kann das Ansteigen der Volumina sogar positiv auf die Beibehaltung der Kontaktflächen genutzt werden. Eine Möglichkeit, einen guten elektrischen Kontakt herzustellen, besteht darin, unter Vorspannung die Einzelteile des Gehäuses wie die Seitenwand 61^{I} oder der Modulgehäuseboden 63^{I} zusammenzuschweißen. Die einen Rahmen bildenden Teile, wie z. B. die Seitenwand 61^{I} und die Modulgehäuserückwand 67^{I}, können in einer Form gespannt angeordnet werden und anschließend zusammengeschweißt werden. Der Rahmen ist geringfügig (1 % bis 2 % weniger als eine reguläre Gesamtlänge aus den aufgeschichteten Einzelzellen 53, 53^{I}, 53^{II}) kleiner als für die aufgeschichteten Einzelzellen 53, 53^{I}, 53^{II} benötigt würde, wenn diese nicht unter Spannung in das Modulvolumen 23 eingebracht worden sind.

Das in Figur 9 gezeigte, teilgeöffnete Modul des Traktionsakkumulators 1^{II} ist ohne Modulgehäusedeckel 65^{I} dargestellt (vgl. Figur 8). Die Seitenteile, wie die Modulgehäuserückwand 67^{I} und wie die Modulgehäuseseitenwand 61^{I}, sind einstückig zu einer umlaufenden Manschette durch ein Strangpressen aus einem Metall hergestellt. Nur Modulgehäusedeckel 65^{I} und Modulgehäuseboden 63^{I} sind gesondert abnehmbar und stellen weitere Teile des Modulgehäuses 33^{I} dar.

In den Figuren 10 bis 15 wird eine Variante eines Traktionsakkumulators 101, 101^{I}, 101^{II} gezeigt, der auf einer rechteckigen Grundform 105 aufbauend neben den Aktivflächen 119 im Modulgehäuse 133, 133^{I}, 133^{II} Kühlkanäle 135, 137 aufweist.

Wie in Figur 10 zu sehen ist, wird die Einzelzelle 153 durch das Modulgehäuse 133 eingefasst. In dem Modulgehäuse 133 ist beidseitig zu der aktiven Fläche 119, die eine rechteckige Grundform 105 aufweist, jeweils ein Kühlkanal 135, 137 angeordnet. Ein erster Kühlkanal 135 umfasst eine Kühlkanalwand 138, die in eine Kühlkanalkammer 191 des Modulgehäuses 133 eingepasst ist. Der erste Kühlkanal 135 befindet sich neben einer Montageschiene 159 und wird somit weitgehend vor möglichen Verwindungen des Modulgehäuses 133 geschützt. Von dem ersten Kühlkanal 135 zweigen weitere Kühlkanäle, wie der Kühlkanal 141 (siehe Figur 11), ab, die quer orientiert zum Kühlkanal 135 sich in einer Kühlplatte 139 (siehe Figur 11) erstrecken. Wie der erste Kühlkanal 135 ist ein zweiter Kühlkanal 137 in einer zweiten Kühlkanalkammer 191^{I}, die sich im Bereich einer zweiten Montageschiene 159^{I} befindet, angeordnet. Die Kühlkanalwand 138^{I} geht in eine Kühlplatte 139 (siehe Figur 11) über. Eine Positionierung der aktiven Fläche 119 in dem Modulgehäuse 133 ist unter anderem durch Abstandshalter 193, 193^{I} lateral festgelegt. Jeder Abstandshalter 193, 193^{I} befindet sich zwischen einer Kühlkanalkammer 191, 191^{I} und einem Konvektionskanal 177, 177^{I}. Ein erster Konvektionskanal 177 ist einer ersten Polfahne 125 zugeordnet. Eine zweite Polfahne 127 ragt in einen zweiten Konvektionskanal 177^{I} hinein. Jeder Konvektionskanal 177, 177^{I} bietet einen Installationsraum für Kontakte, wie ein erster Kontakt 147 oder ein zweiter Kontakt 149, die auch als elektrische Leiterbrücken bezeichnet werden können. Die Abstandshalter 193, 193^{I} können in Ausführungsbeispielen unter anderem als Komponenten von einem Zugelement bzw. als Führungen für Zugelemente ausgebildet sein. Ein Zugelement dient dazu, eine Mehrzahl von Einzelzellen, wie die Einzelzelle 153, zu umschließen und insbesondere zu einer kompakten Einheit zusammenzupressen. Durch einen ebenflächigen Anschluss der Aktivfläche 119 an den Modulgehäuseboden 163, liegt ein erster Abfuhrzweig für Wärmeleistung vor. Die Kühlkanäle 135, 137 bilden einen zweiten Abfuhrzweig für Wärmeleistung, dessen Kühlleistung, insbesondere nach Bedarf, in Verbindung mit einem geschlossenen Kühlkreislauf zuschaltbar ist. In vorteilhaften Ausführungsformen kann ein weiterer Wärmeabfuhrzweig z. B. auch durch mindestens eine Wärmeleitungsbrücke ausgebildet sein. Zur Überwachung einer Temperatur an einer bestimmten Stelle der aktiven Fläche 119 (z. B. am Randbereich, benachbart zu den Kühlkanälen 135, 137) dient ein Temperatursensor 198, 198^{I}. Die Temperatursensoren 198, 198^{I}, die z. B. als Analogsensoren wie ein Widerstand oder ein Bimetallkontakt ausgebildet sind, sind jeweils in dem Modulgehäuse 133, insbesondere in den Kühlkanalkammern 191, 191^{I}, angeordnet. Die Kühlkanäle 135, 137 werden durch eine temperatursensorisch gesteuerte Pumpe eines Kühl- bzw. Wärmetauschersystems (nicht dargestellt) bedarfsgerecht mit Kühlmittel versorgt.

Um solche Ladesteuerungen wie ein Load-Balancing zu ermöglichen, können Zellspannungsüberwachungen noch zusätzlich in dem Modulgehäuse 133 nach Figur 10 verbaut sein. Eine Zellspannungsüberwachung kann die Spannungen jeder einzelnen Zelle, aber auch die Spannung von einer Gruppe von Zellen aufnehmen und ggf. auf einen kritischen oder einen funktionalen Arbeitsbereich überwachen. Beträgt die Nennspannung einer Einzelzelle z. B. 3,7 Volt, so kann ein funktionaler Bereich oberhalb von 3,7 Volt angesiedelt werden. Sinkt die Einzelzellspannung unter 3,7 Volt, so kann von einer kritischen Spannung ausgegangen werden. Werden mehrere Zellen zu einer Gruppe, einem Sub-Stack zusammengefasst, um gemeinsam überwacht zu werden, so ist die Einzelspannung mit der Anzahl der zusammengeschlossenen Zellen zu multiplizieren. D. h., z. B. bei drei Zellen beträgt die Nennspannung 11,1 Volt. Die Gruppenzellspannungsüberwachung würde also auf einen Grenzwert von 11,1 Volt überwachen.

In Figur 11 wird eine Sandwich-Kühlplatte 139 gezeigt (in der Mitte geöffnet, d. h. nur ein Blech bzw. nur eine Seite), die ebenfalls in dem Modulgehäuse 133 angeordnet werden kann. Die abschnittsweise parallelverlaufenden Kühlkanäle 141, 141^{I}, 141^{II}, 141^{III} führen das Kühlmedium 143. Auch die Kühlplatte 139 hat eine längliche, nahezu identische Grundform 105 im Vergleich mit der Grundform 105 der Einzelzelle 153 (siehe Figur 10). Die Einzelzelle 153 wird in dem Gehäuse der Zelle 131 (siehe Figur 12) eingespannt. Wie weitergehend durch Höhenvergleich zwischen Figur 11 und Figur 10 zu sehen ist, kann eine erste Höhe 140 der Sandwich-Platte 139 vorzugsweise geringfügig, z. B. um einen Wert zwischen 1 mm und 10 mm, von einer Länge einer Hochseite 115 der Einzelzelle 153 abweichen. Vorteilhaft ist mindestens ein Sandwichplattenfuß 142 vorhanden, der punktuell einen Abstandshalter, ähnlich, insbesondere in seinen Dimensionen, zum Abstandshalter 193 (vgl. Fig. 10), zwischen der Sandwich-Kühlplatte 139 und einem Modulgehäuse 133 bildet. Damit wird ein Verlust von Kühlleistung an das Modulgehäuse 133 so gering wie möglich gehalten. Eine mögliche Bildung von Kondenswasser an dem Modulgehäuse 133 kann unterdrückt werden. Die Sandwich-Platte 139 kann in jeweils unterschiedlichen Ausführungsformen aus einem Metall, wie Edelstahl oder Kupfer, oder aus einem Kunststoff mit geeignet hoher thermischer Leitfähigkeit gefertigt sein. Eine Dicke der Sandwich-Kühlplatte 139 in einer normalen Richtung, stehend auf der größten Fläche der Platte bzw. der Grundform 105 für das Modulgehäuse 133, beträgt ca. 1,3 mm. In mehreren Versuchsreihen zur Kühlung eines Traktionsakkumulators 101, 101^{I}, 101^{II} haben sich Dicken zwischen 0,5 mm und 5 mm als besonders praktikabel erwiesen. Eine in einem Randbereich der Grundform 105 umlaufende Dichtlippe 195 der Sandwich-Kühlplatte 139 umschließt alle parallel verlaufenden Kühlkanäle 141, 141^{I}, 141^{II}, 141^{III} und insbesondere den ersten Kühlkanal 135 und den zweiten Kühlkanal 137 zumindest in einem Querschnittsbereich. Reicht die Flächenpressung aus, kann ggf. auch die Dichtlippe 195 entfallen. Der erste Kühlkanal 135 und der zweite Kühlkanal 137 und jeweils Endbereiche der Sandwich-Platte 139 sind zusammengeschlossen. Die Sandwich-Platte 139 weist in den Endbereichen eine geringere zweite Höhe 140^{I} auf als die erste Höhe 140. Die Dichtlippe kann als z. B. von einer insbesondere unter Einwirkung von Kühlmittel quellfähigen Dichtschnur oder einem Dichtgummiring gebildet sein. Damit ist ein für ein Kühlmedium 143 undurchlässiger Anschluss der Sandwich-Kühlplatte 139 an eine Einzelzelle, wie die Einzelzelle 153 gem. Figur 10, bzw. deren Gehäuse ausbildbar. Bei einer über eine Einzelzellenanschlussfläche 187 der Sandwich-Kühlplatte 139 hinweg gleichmäßigen Flächenverpressung von einer wechselweisen Stapelanordnung von Sandwich-Kühlplatten, wie der Sandwich-Kühlplatte 139, und Einzelzellen, wie der Einzelzelle 153, durch Zugelemente kann bereits eine ausreichende Dichtigkeit - auch ohne eine Dichtlippe 195 - erzielt werden. Die Dichtlippe 195 dient unter anderem zum Ausgleich produktionsbedingter Oberflächenrauigkeiten.

Bei einer Montage der einzelnen Zellen 153 und der Kühlplatten 139 ist der Kühlkanal 135 zu dichten. Der Kühlkanal 135 ist ein durchgehend dichter Kühlkanal 135. Als Möglichkeiten des Dichtens kommen Kleben und (Kunststoff-)Verschweißen in Betracht. In der in Figur 11 gezeigten Ausführungsform sind die einzelnen Stücke des Kühlkanals 135 geklebt. Alternativ kommt natürlich auch die Anwendung von Elastomerdichtung(en) wie z. B. O-Ringe in Betracht.

In Figur 11 ist außerdem gezeigt, dass der erste Kühlkanal 135 und der zweite Kühlkanal 137, vorzugsweise auch die parallelen Kühlkanäle 141, 141^{I}, 141^{II}, 141^{III} eine Höhe bzw. Tiefe aufweisen, die zumindest einem Teil der Dicke der Sandwich-Kühlplatte 139 entspricht. Die Kühlkanäle 135, 137, die beide auch als Versorgungskühlkanäle bezeichnet werden können, dienen zur Zufuhr bzw. Abfuhr von Kühlmittel 143 zu bzw. aus den Kühlkanälen 141, 141', 141^{II}, 141^{III} Die Kühlkanälen 141, 141^{I}, 141^{II}, 141^{III} können auch als Plattenkühlkanäle bezeichnet werden, die insbesondere in die Versorgungskühlkanäle 135, 137 münden. Die Kühlkanäle 141, 141^{I}, 141^{II}, 141^{III} liegen in der Sandwich-Kühlplatte 139 als aufgefächerte Durchflussverbindung(en) vor. Ein Durchfluss erfolgt beispielsweise durch die Grundform 105 in eine Richtung, die von einer ersten Seitenwand 161 zu einer zweiten Seitenwand 161^{I} hinführt. Der erste Kühlkanal 135 und der zweite Kühlkanal 137 weisen eine Kanalhöhe 144 und eine Kanalbreite 144^{I} auf. Die Kanalhöhe 144 beträgt ein Mehrfaches der Kanalbreite 144^{I}. Die Kanalhöhe 144 ist kleiner als eine Hochseite 115 einer Einzelzelle 153 (s. Fig. 10). Damit wird der Raum in dem Modulgehäuse 133 optimal genutzt, sodass eine möglichst große Grundform 105 in dem Modulgehäuse 133 neben den erforderlichen elektrischen Anschlüssen (nicht dargestellt) vorhanden sein kann. Eine möglichst gleichmäßige Durchströmung der Sandwich-Kühlplatte 139 wird durch die Führung der Strömung an Kühlkanallamellen, wie die Kühlkanallamellen 194, 194^{I}, 194^{II}, erzeugt. Die Kühlkanallamellen 194, 194^{I}, 194^{II} begrenzen Kühlkanäle, wie die Kühlkanäle 141, 141^{I}, 141^{II}, 141^{III} Das Kühlmedium 143, das auch als Kühlmittel oder Kühlfluid bezeichnet werden kann, strömt somit vergleichmäßigt durch verschiedene Bereiche der Grundfläche 105. Die Kühlkanäle die Kühlkanäle 141, 141^{I}, 141^{II}, 141^{III} sind enger bzw. weniger breit als eine Kanalbreite 144^{I} und insbesondere weniger hoch als eine Kanalhöhe 144 des ersten Kühlkanals 135 bzw. zweiten Kühlkanals 137. Die Kühlkanäle 141, 141^{I}, 141^{II}, 141^{III} weisen in einer Nähe zu den Versorgungskanälen 135, 137 eine erste Kühlkanalweite 196 auf, die kleiner ist als eine zweite Kühlkanalweite 197, die sich im übrigen Bereich der Grundform 105 erstreckt. Anders gesagt, bildet eine längere Kompensationsstrecke 199 und daraus resultierend ein kürzerer Kühlkanal 141 durch ihre größere Länge auch einen größeren Durchflusswiderstand aus als eine kürzere Kompensationsstrecke 199^{I}. Liegt ein längerer Kühlkanal 141^{III} vor, ist die Kompensationsstrecke 199^{I} kürzer (siehe auch den Kühlkanal 141^{I}). Damit lässt sich in den Versorgungskanälen 135, 137 ein Durchflussgeschwindigkeitsprofil, das über eine Versorgungskanalhöhe 144 hinweg auftragbar ist, konstant halten. Eine quasi-laminare Durchströmung der Kühlkanäle 135, 137, 141, 141^{I}, 141^{II}, 141^{III} wird ermöglicht, wodurch die Kühlung mit einer geringeren Pumpleistung auskommt. Insbesondere sind die Kühlkänäle verschiedener Sandwich-Kühlplatten wie die Kühlkanäle 141, 141^{I}, 141^{II}, 141^{III} in einer Stapelanordnung gemäß Figur 12, die eine Mehrzahl von Sandwich-Kühlplatten, wie die Sandwich-Kühlplatte 139, aufweist, zueinander parallel angeordnet.

Die Zellengehäuse 131, 131^{I}, 131^{II} bieten, so wie in Figur 12 zu sehen ist, die Berührflächen für das Anlagern der Einzelzellen 153. Die Einzelzellen, wie die in Figur 12 gezeigte Einzelzelle 153 des Traktionsakkumulators 101, sind auf einer Trägerplatte 145 angeordnet. In Abhängigkeit der Orientierung des Traktionsakkumulators 101 bilden entweder die Deckplatte 146 oder die Trägerplatte 145 ein mechanisches Stützelement des Traktionsakkumulators 101. Die Trägerplatte 145 und die Deckplatte 146 gehören zu dem Modulgehäuse 133. In dem Modulgehäuse 133 sind zwischen der Trägerplatte 145 und der Deckplatte 146 alle Zellengehäuse, wie die Zellengehäuse 131, 131^{I}, 131^{II}, bündig mit Sandwich-Platten, wie den Sandwich-Platten 139, 139^{I}, 139^{II}, nebeneinander angeordnet. Die Sandwich-Platte 139 bildet einen Teil des Zellengehäuses 131. Anders gesagt, umfasst jedes Zellengehäuse 131, 131^{I}, 131^{II} genau eine Sandwich-Platte 139, 139^{I}, 139^{II}. Die Einzelzellenanordnung erstreckt sich in dem Modulgehäuse 133 von einem ersten Sammelstromleiter 155 über eine erste Sekundärzelle 103, eine zweite Sekundärzelle 103^{I}, über insgesamt weitere 20 Sekundärzellen bis zu einem zweiten Sammelstromleiter 157. Es kann auch ein Traktionsakkumulator mit einer größeren oder kleineren Anzahl von Sekundärzellen gleich strukturiert zu dem aus Figur 10 bekannten Traktionsakkumulator 101 aufgebaut werden. Außen 151 sind an dem Modulgehäuse 133 die Kühlkanalanschlüsse 136, 136^{I}, die als Schnellverbinder für den ersten Kühlkanal 135 vorhanden sind, angeordnet. Die Schnellverbinder 136, 136^{I} sind mit einem Entsperrelement ausgestattet. Das Entsperrelement (nicht dargestellt) ermöglicht beim Anschließen des Traktionsakkumulators 101 an einen geschlossenen Kühlkreislauf das Öffnen eines jeweils zugeordneten Schnellverbindergegenstücks mit Rückhalteventil. Damit kann ein kühlmediumgekühlter Akkumulator 101 besonders schnell durch einen zweiten, insbesondere baugleichen Akkumulator ersetzt werden. Dieser zweite kann als Energiequelle sofort in Betrieb genommen werden.

Figur 13 zeigt ein Modulgehäuse 133^{I} eines Traktionsakkumulators 101^{I} von oben, d. h. in einer Ansicht auf einen Modulgehäusedeckel 165. Der Modulgehäusedeckel 165 weist mehrere Aussparungen, insbesondere für eine erste Konvektionsausströmöffnung 179 und eine erste Kontaktstelle 181 auf. Von dem Modulgehäuse 133^{I} werden die Einzelzellen (nicht sichtbar) umschlossen, die von den paarweise vorhandenen Zugelementen 134, 134^{I} sowie 134^{II}, 134^{III} zusammengepresst sind. Zugelemente 134, 134^{I}, 134^{II}, 134^{III} sind über Gehäuseverbinder 132, 132', 132^{II}, 132^{III} flexibel an das Modulgehäuse 133^{I} angeschlossen. Zu einem Gehäuseverbinder 132, 132^{I}, 132^{II}, 132^{III} gehört eine flexible Hartgummihülse. Damit lassen sich Installationen im Inneren des Modulgehäuses 133^{I} von dem Modulgehäuse 133^{I} abkoppeln. Es erfolgt eine Abkopplung von Vibrationen, Verspannungen oder Verwindungen, die auf das Modulgehäuse 133^{I}, z. B. über die Montageschienen 159, 159^{I}, einwirken können. Jede Montageschiene 159, 159^{I} erstreckt sich ein Stück entlang jeweils einer Seite des Gehäuses 133^{I}. Die Montageschiene 159, 159^{I} ist Teil einer größeren Gesamtschiene. Die Montageschiene159, 159^{I} hat eine Länge, die auf das Hauptschwingungsverhalten des Traktionsakkumulators 101^{I} abgestimmt ist. Die Montageschienen 159, 159^{I} sind entlang einer Länge des Gehäuses 133^{I} nicht komplett durchgehend, sie sind unterbrochen und setzten sich aus einzelnen Stücken zusammen.

Wie bereits zu Figur 13 angesprochen, gibt es Gehäuseverbinder 132, 132^{I}, 132^{II}, 132^{II}. Dank der Gehäuseverbinder 132, 132^{I}, 132^{II}, 132^{III} lassen sich von Außen auf den Traktionsakkumulator 101^{I} einwirkende Vibrationen besser entkoppeln. Außerdem erlaubt die Kombination von Zugelementen 134, 134^{I}, 134^{II}, 134^{III} und der als Durchführungen gestalteten Gehäuseverbinder 132, 132^{I}, 132^{II}, 132^{III} ein Nachspannen oder Lösen der Zugelemente 134, 134^{I}, 134^{II}, 134^{III} von außerhalb des Modulgehäuses 133^{I}.

Eine weitere Ausführungsform eines Modulgehäuses 133^{II} für einen Traktionsakkumulator 101^{II} ist in isometrischer Darstellung in Figur 14 gezeigt. Die Modulgehäuserückwände 167, 167^{I} des Modulgehäuses 133^{II} weisen Durchgänge für einen ersten Kühlkanal 135 und für einen zweiten Kühlkanal 137 auf. Anders gesagt, sind die beiden Kühlkanäle 135, 137 parallel durch das Modulgehäuse 133^{II} hindurch verlegt. In einer triangulären Konfiguration nach Art eines gleichschenkligen Dreiecks bzw. Trapezes befindet sich zwischen den Kühlkanälen 135, 137 eine erste Kontaktstelle 181. Die erste Kontaktstelle 181 ist einer ersten Modulgehäuserückwand 167 zugeordnet. Somit wird ein maximaler Abstand für die Installation der jeweiligen Anschlüsse (nicht gezeigt) in einem Kraftfahrzeug ermöglicht. Kühlmedium kann nicht zur Kontaktstelle 181 gelangen.

Wie in Figur 15 zu sehen ist, die das in Figur 13 gezeigte Modulgehäuse 133^{I} in geöffneter Form zeigt, befinden sich die Kontakte 147, 149 benachbart zueinander in einer Fluchtlinie. Die Kontakte 147, 149 können durch Schweißpunkte 129 realisiert sein. Anders als in Figur 13 wurden zur besseren Übersichtlichkeit in Figur 15 die Zugelemente ausgeblendet. Zwischen zwei Einzelzellen, wie den Einzelzellen 153, 153^{I}, ist jeweils eine Sandwich-Platte, wie die Sandwich-Platte 139, eingepasst. Die Sandwich-Platte 139 ist sowohl mit dem ersten Kühlkanal 135 als auch mit dem zweiten Kühlkanal 137 verbunden. Die Sandwich-Platte 139 kann auch als Kühlplatte oder Durchfluss- bzw. Querflussverbindung bezeichnet werden. Durch ein Kältemittel (nicht dargestellt) erhält die Kühlplatte 139 die Fähigkeit, Kühlleistung für den Traktionsakkumulator 101^{I} zur Verfügung zu stellen. Die Kühlleistung wird den Einzelzellen 153, 153^{I} gleichmäßig bereitgestellt. Die Kühlplatte 139 arbeitet als Kälteverteiler. Eine erste Einzelzelle 153 und eine zweite Einzelzelle 153^{I} sind über die Kühlplatte 139 wärmeflussmäßig miteinander verbunden. Durch eine Aneinanderreihung von Kühlplatten, wie der Kühlplatte 139, und Einzelzellen 153, 153^{I} lässt sich über ein gesamtes Modulvolumen 123 hinweg eine Betriebstemperatur des Traktionsakkumulators 101^{I} stabilisieren. An den Einzelzellen, wie den Einzelzellen 153, 153^{I}, ist jeweils an Hochseiten 109, 109^{I} eine Abschirmfeder, wie die Abschirmfeder 130, angebracht. Die Abschirmfedern 130 bieten einen zusätzlichen Schutz sowohl thermisch als auch mechanisch, insbesondere schwingungstechnisch, für die Kühlkanalwände 138, 138^{I}. Hohe Außentemperaturen oder Deformationen können sich über Modulgehäuseseitenwände 161 in geringerem Maß (im Vergleich mit einem Traktionsakkumulator ohne Abschirmfeder) auf die Kühlkanäle 138, 138^{I} auswirken, sodass eine Kühlung der Einzelzellen 153, 153^{I} besonders effizient bzw. zuverlässig arbeiten kann.

In Figur 16 wird ein Einzelzellengehäuse 131^{III} mit einer Fläche, die mit einer Berstfuge 76 ausgestattet ist, gezeigt. Die Berstfuge 76 befindet sich in einem speziellen Bereich des Gehäuses 131^{III}, dem Berstbereich 150. Der Berstbereich 150 liegt benachbart, unmittelbar anschließend an einen der Kontakte, dem ersten Kontakt 147^{I} des Gehäuses. Die Berstfuge führt in ihrer Haupterstreckungsrichtung von der Trägerplatte 145^{I} des Einzellengehäuses 131^{III} weg. In Figur 16 ist zu sehen, dass das Einzelzellengehäuse 131^{III} unterschiedlich dicke Seiten hat, die Trägerplatte 145^{I} ist die dickste Platte des Einzelzellengehäuses 131^{III}.

Figur 17 zeigt eine weitere Ausführungsform eines Traktionsakkumulators 201. Von außen ist von dem Traktionsakkumulator 201 dessen Modulgehäuse 233 zu sehen. Wie anhand der Figur 18 zu erkennen ist, sind die wesentlichen Teile, die Einzelzellen mit ihren Zellengehäusen 231, 231^{I}, 231^{II}, 231^{III} im Inneren des Modulgehäuses 233 (siehe Figur 17) angeordnet. Das Modulgehäuse 233 ist aus einem Strangpressprofil hergestellt. Das Modulgehäuse 233 bildet durch seine einzelnen Seiten wie dem Modulgehäusedeckel 265 ein die Einzelzellengehäuse 231, 231^{I}, 231^{II}, 231^{III} komplett umschließendes Gehäuse. Weitere Seiten des Modulgehäuses 233 sind eine erste Modulgehäuseseitenwand 261 und eine zweite Modulgehäusewand 261^{I}. Eine weitere Seite des Modulgehäuses 233 ist durch den Modulgehäuseboden 263 gebildet.

An den Modulgehäuseseitenwänden 261, 261^{I} sind kurze, nur wenige Zentimeter sich erstreckende Montageschienen 259, 259^{I}, 259^{II}, 259^{III} angeordnet, die zueinander beabstandet sind. Die Montageschienen 259, 259^{I}, 259^{II}, 259^{III} liegen allesamt in einer Flucht. Sie sind mit Abständen untereinander auf der gleichen Höhe an der Modulgehäuseseitenwand 261 befestigt.

Der Modulgehäuseboden 263 ist zugleich eine tragende Platte mit Kühlmittelleitungen 292, 292^{I}. Die Kühlmittelleitungen 292, 292^{I} verlaufen parallel in die gleiche Richtung. Die Kühlmittelleitungen 292, 292^{I} reichen von einer Seite bis zu einer anderen Seite des Modulgehäuses 233. Der Modulgehäuseboden 263 übernimmt die Funktion einer Trägerplatte 245. Zwischen Trägerplatte 245 und den übrigen Teilen des Modulgehäuses, wie z. B. den Modulgehäuseseitenwänden 261, 261^{I} oder wie z. B. den Zellengehäusen 231, 231^{I}, 231^{II}, 231^{III} (siehe Figur 18) ist eine Folie 290 zwischengelegt, die eine Wärmeleitfolie und zugleich eine Isolationsfolie ist. Die dickste Seite stellt der Modulgehäuseboden 263 dar. In einer alternativen, hier nicht dargestellten Variante kann anstelle einer Folie an jener Stelle auch eine pastöse Schicht, z. B. eine elastomere, leicht klebende Wärmeleitschicht während der Montage zwischengebracht werden.

Wie gesagt, Figur 18 zeigt große Teile des "Innenlebens" des Traktionsakkumulators 201, der von außen in Figur 17 dargestellt ist. In Figur 18 ist zu sehen, dass die Zellengehäuse 231, 231^{I}, 231^{II}, 231^{III} nebeneinander geschichtet über ihre drei Seiten kontaktierend aufgereiht sind.

Wie sich aus einer Zusammenschau der Figuren 17 und 18 ergibt, sind jeweils zwei Zellen in einem Zellengehäuse 231, 231^{I}, 231^{II}, 231^{III} auf einem gleichen Potential 288, 288', 288" zusammengeschlossen. Das heißt, die beiden Zellen 253, 253^{I} haben das Potential 288. Die beiden Zellen 253^{II}, 253^{III} haben das Potential 288^{I}.

Unterhalb der Zellengehäuse 231, 231', 231^{II}, 231^{III} ist eine Einzelzellengehäuseplatte 289 als Teil des Zellengehäuses angeordnet. Bei ausreichender linearer Anordnung der Zellengehäuse 231, 231^{I}, 231^{II}, 231^{III} kann die Einzelgehäuseplatte 289 entfallen. Wird mit größeren Toleranzen gefertigt, so dient die Einzelgehäuseplatte 289 als Kontaktierungsplatte für einen Wärmeübergang. Unterhalb der Zellengehäuse 231, 231^{I}, 231^{II}, 231^{III} ist die Folie 290 als Zwischenglied zwischen Trägerplatte 245 und den wärmetragenden Teilen der Wärme aus den Zellengehäuse 231, 231^{I}, 231^{II}, 231^{III} angeordnet. Die Trägerplatte 245 hat wenigstens eine Kühlmittelleitung 292^{II}. Mit dem Kühlmittel können alle einzelnen Zellengehäuse 231, 231^{I}, 231^{II}, 231^{III} unterströmt werden. Somit kann Wärme aus allen Zellengehäuse 231, 231', 231^{II}, 231^{III} ausgebracht werden.

Elektrisch sind die Zellengehäuse 231, 231', 231^{II}, 231^{III} in Serie verbunden. Wie bereits zuvor angeklungen, ist aus einer Zusammenschau der Figuren 19 und 18 zu entnehmen, dass jeweils zwei Einzelzellen 253, 253^{I}, 253^{II}, 253^{III} zu einem Zellengehäuse 231, 231^{I} zusammengefügt sind. Hierdurch ergeben sich die Potentiale der Zellengehäuse 231, 231^{I}. Die erste Einzelzelle, die ähnlich zu der Einzelzelle 253 ist, und die letzte Einzelzelle, die ähnlich zu der Einzelzelle 253^{III} ist, sind über Sammelstromleiter 255, 257 nach außen durchkontaktiert. Durch Abstandshalter 293, 293^{I} wird eine Flächenpressspannung auf die Zellengehäuse 231, 231^{I}, 231^{II}, 231^{III} aufgebracht. Die Abstandshalter 293, 239^{I} sind Füllglieder zwischen den Modulgehäuseseitenwänden 261, 261^{I} und dem Zellengehäuse 231, 231^{I}, 231^{II}, 231^{III} Hierdurch stehen die Zellengehäuse 231, 231^{I}, 231^{II}, 231^{III} unter Spannung (in mechanischem Sinne).

Der Ausschnitt, der mit X in Figur 18 gekennzeichnet ist, ist noch einmal größer in Figur 19 dargestellt. Hierdurch ist (insbesondere anhand der Schraffierungen) die Potentialgleichschaltung von Einzelzellen 253, 253^{I}, 253^{II}, 253^{III} zu erkennen (gleiche Schraffierung drückt ein Potential aus). Die Aktivflächen bzw. die aktiven Flächen 19, 119 (vergleiche Figur 6 und Figur 10) sind so isolierend an dem jeweiligen Zellengehäuse 231, 231^{I}, 231^{II}, 231^{III} geführt, dass über eine Seite eine Kontaktierung stattfindet. Hierdurch wird das Potential 288, 288^{I}, 288^{II} bestimmt (siehe Figur 19). Rauigkeiten und Unebenheiten an der zur Trägerplatte 245 kontaktierenden Seite der Zellengehäuse 231, 231^{I}, 231^{II}, 231^{III} werden durch die Einzelgehäuseplatte 289 ausgeglichen. Zur Abführung der Wärme gibt es eine Wärmeleitfolie 290. Die Wärmeleitfolie 290 leitet die Wärme aus den Einzelzellen 253, 253^{I}, 253^{II}, 253^{III} auf die Trägerplatte 245. Die Wärme wird über das Kühlmittel in der Kühlmittelleitung 292 ausgebracht.

Einzelne Merkmale aus den beschriebenen Ausführungsformen und Varianten sowie den in Figuren dargestellten Ausführungsbeispielen lassen sich einzeln und in Merkmalsgruppen beliebig zu weiteren Ausführungsbeispielen miteinander kombinieren, wodurch sich zusätzliche erfindungsgemäße Aspekte und Vorteile ergeben können.

Eine sinnvolle Weiterentwicklung besteht z. B. darin, einen einzelnen Kühlkanal, wie einen der Kühlkanäle 141, 141^{I}, 141^{II}, 141^{III} nach Figur 11, vorzugsweise in einem Bereich, der parallel zu einem weiteren Kühlkanal verläuft, aufeinander folgend mit unterschiedlichen Querschnittsgrößen auszustatten. Die unterschiedliche Größe kann z. B. als eine schrittweise zunehmende Kühlkanalweite im Bereich einer ersten Kühlkanalweite 196 und/oder im Bereich einer zweiten Kühlkanalweite 197 vorliegen. Insbesondere können die Kompensationsstrecken 199, 199^{I} konisch bzw. trichterförmig ausgebildet sein. Eine schrittweise Zunahme (bzw. Abnahme) der Kühlkanalweite 196, 197 erfolgt dabei vorzugsweise entlang einer Steigung des Kühlkanals im Vergleich mit dem Verlauf eines Modulgehäusebodens. Nach einem weiteren Aspekt können in einer vorteilhaften Weiterentwicklung die Querschnittsgrößen der Kühlkanäle proportional zu einer räumlichen Temperaturverteilung (ohne Kühlmittelzufuhr) an Einzelzellen, wie der Einzelzelle 153 in Figur 12, gewählt sein. Die Temperaturverteilung entsteht durch Wärmebildung und Wärmefluss in Lade- oder Entladevorgängen, z. B. in einem Lastbetrieb eines Traktionsakkumulators 101, 101^{I}, 101^{II}. Ein größerer Kühlkanalquerschnitt bietet ein größeres Aufnahmevolumen für Kühlmittel in einem ersten Bereich, in dem die betriebsbedingte Wärmeleistung eine höhere Temperatur bewirkt, als in einem zweiten Bereich mit einer niedrigeren Temperatur, in dem ein im Vergleich kleinerer Kühlkanalquerschnitt ausreicht. Das Kühlmittel weist vorzugsweise eine Wärmekapazität auf, die größer oder gleich einer Wärmekapazität von Wasser ist. In einem Modulgehäuse 133 (siehe Figur 10) bzw. in einem Traktionsakkumulator 101^{I}, 101^{II} ist somit eine noch gleichmäßigere Temperatur einstellbar. Wärmebildung bzw. Wärmefluss in den Traktionsakkumulatoren 101, 101^{I}, 101^{II} ist mit bekannten numerischen Verfahren berechenbar, woraus sich unter anderem eine möglichst günstige Steigung oder ein Kühlkanalquerschnitt ergibt.

Über die Kanalgeometrie der Kühlkanäle 141, 141^{I}, 141^{II}, 141^{III} kann auch das Laufverhalten bzw. die Strömungszeit des Kühlmediums beeinflusst werden. Hierdurch kann eine Gleichverteilung zwischen den einzelnen Kanälen 141, 141^{I}, 141^{II}, 141^{III} sichergestellt werden. Die Kühlkanäle 141, 141^{I}, 141^{II}, 141^{III} haben zueinander unterschiedliche Längen. Sie haben zueinander unterschiedliche Kühlkanalweite 196, 197. Die Längen und die Kühlkanalweiten 196,197 sind aufeinander abgestimmt, sodass sich eine Gleichverteilung ergibt.

Figur 20 zeigt ein Modulgehäuse 333. Das Modulgehäuse 333 ist Teil des Traktionsakkumulators 301 und stellt dessen äußere Hülle dar. Das Modulgehäuse 333 ist entlang von vier Seiten einstückig ausgestaltet. Als ein Teil sind der Boden bzw. der Modulgehäuseboden 363, der Deckel bzw. der Modulgehäusedeckel 365 und die Schienen 359 des Modulgehäuses 333 aus einem metallischen Strangpressprofil gefertigt. Der Boden 363 ist nur halb so dick wie der Deckel 365 des Modulgehäuses 333. Der Deckel 365 überspannt die in Figur 21 zu sehenden Zellengehäuse 331, 331^{I}, 331^{II}, 331^{III}. Der Deckel 365 schafft die mechanische Stabilität für gängige Kraftfahrzeugprüfungen wie eine Prüfung durch Befahren einer Rüttelstrecke.

Figur 21 zeigt das Innenleben des Modulgehäuses 333 nach Figur 20. Die Zellengehäuse 331, 331^{I}, 331^{II}, 331^{III} liegen alle parallel zueinander angeordnet, sozusagen Seite auf Seite, genauer jeweils an gleichartigen Seiten aufgestapelt. Die Platten des Modulgehäuses 333 spannen die Zellengehäuse 331, 331^{I}, 331^{II}, 331^{III} ein. Die Kontakte 347, 347^{I}, 347^{II}, 347^{III} sind auf einer gleichen Höhe. Die Kontakte 347, 347^{I}, 347^{II}, 347^{III} liegen nebeneinander. Das Zugelement 334 setzt die Platten des Gehäuses fest. Das Zugelement 334 ist hohl und kann zugleich als Kühlkanal, insbesondere für eine Kühlflüssigkeit, genutzt werden.

Verständlicherweise können die in einzelnen Ausführungsbeispielen gezeigten Weiterbildungen auch in einer weiteren Ausgestaltung kombiniert werden, z. B. ein Modulgehäuse mit einer flüssigkeitsgekühlte Trägerplatte sowie mit flüssigkeitsgekühlten Leitungen, die in den Traktionsakkumulator und somit zu den Zellengehäusen hineinführen.

**Bezugszeichenliste**

| | |
|---|---|
| 1, 1^{I}, 1^{II}, 101, 101^{I}, 101", 201, 301 | Traktionsakkumulator |
| 3, 3^{I}, 3^{II}, 3^{III}, 103, 103^{I} | erste, zweite, dritte, vierte Sekundärzelle |
| 5, 105 | Grundform |
| 7, 7' | erste, zweite Langseite |
| 9, 9^{I}, 109, 109^{I} | erste, zweite Hochseite |
| 11 | Breite |
| 13 | Länge, insbesondere einer Langseite |
| 15, 115 | Länge, insbesondere einer Hochseite |
| 17, 17^{I} | mittlerer Bereich, insbesondere einer Hochseite |
| 19, 119 | Aktivfläche bzw. aktive Fläche |
| 21 | Konversionsvolumen |
| 23, 123 | Modulvolumen |
| 25, 125 | erste Polfahne, insbesondere Polfahne des positiven Pols |
| 27, 127 | zweite Polfahne, insbesondere Polfahne des negativen Pols |
| 129 | Schweißpunkt |
| 130 | Abschirmfeder |
| 31, 31^{I}, 31^{II} 131, 131^{I}, 131^{II}, 131^{III}, 231, 231^{I}, 231^{II}, 231^{III} 331, 331^{I}, 331^{II}, 331^{III} | Zellengehäuse |
| 132, 132^{I}, 132^{II}, 132^{III} | Gehäuseverbinder |
| 33, 33^{I}, 133, 133^{I}, | Modulgehäuse |
| 133^{II}, 233, 333 134, 134^{I}, 134^{II}, 134^{III} 334 | Zugelement |
| 135 | erster Kühlkanal |
| 136, 136^{I} | Kühlkanalanschluss, insbesondere Schnellverbinder |
| 137 | zweiter Kühlkanal |
| 138, 138^{I} | Kühlkanalwand |
| 139, 139^{I}, 139^{II} | Sandwich-Platte bzw. Kühlplatte |
| 140, 140^{I} | Plattenhöhe, insbesondere Sandwichplattenhöhe |
| 141, 141^{I}, 141^{II}, 141^{III} | Kühlkanal, insbesondere in einer Sandwich-Platte |
| 142 | Plattenfuß, insbesondere Sandwichplattenfuß |
| 143 | Kühlmedium wie ein Kältemittel oder ein Glykol-Wasser-Gemisch |
| 144 | Versorgungskanalhöhe |
| 144^{I} | Versorgungskanalbreite |
| 45, 145, 145^{I}, 245 | Trägerplatte |
| 146 | Deckplatte, insbesondere mit der Funktion einer Trägerplatte |
| 47, 147, 147^{I}, 347, 347^{I}, 347^{II}, 347^{III} | erster Kontakt |
| 49, 149 | zweiter Kontakt |
| 150 | Berstbereich |
| 51, 151 | Außen |
| 53, 53^{I}, 53^{II}, 153, 153^{I}, 253, 253^{I}, 253^{II}, 253^{III} | Einzelzelle |
| 55, 155,255 | erster Sammelstromleiter |
| 57, 157,257 | zweiter Sammelstromleiter |
| 59, 59^{I}, 59^{II}, 59^{III}, 159, 159^{I}, 159^{II}, 159^{III}, 259, 259^{I}, 259^{II}, 259^{III}, 359 | Montageschiene |
| 61, 161, 261 | Modulgehäuseseitenwand, insbesondere erste Seitenwand |
| 61^{I}, 161^{I}, 261^{I} | Modulgehäuseseitenwand, insbesondere zweite Seitenwand |
| 62 | oberer Bereich |
| 63, 63^{I}, 163, 263, 363 | Modulgehäuseboden |
| 65, 65^{I}, 165, 265, 365 | Modulgehäusedeckel |
| 67, 67^{I}, 167, 167^{I} | Modulgehäuserückwand |
| 69, 69^{I} | Dicke |
| 71 | Austauschfläche |
| 73, 73^{I} | Innenseite |
| 75 | Konvektionseinströmöffnung, insbesondere Bereich des Modulgehäusebodens |
| 76 | Berstfuge, insbesondere (Doppel-)Y-förmig |
| 77, 77^{I}, 177, 177^{I} | Konvektionskanal |
| 79, 179 | erste Konvektionsausströmöffnung |
| 79^{I} | zweite Konvektionsausströmöffnung |
| 81, 181 | erste Kontaktstelle |
| 81^{I} | zweite Kontaktstelle |
| 83 | erste Abdeckung |
| 83^{I} | zweite Abdeckung |
| 85, 85^{I}, 85^{II} | Anschlussfläche, insbesondere für einen Modulgehäusedeckel |
| 187 | Einzelzellenanschlussfläche |
| 288, 288^{I}, 288^{II} | Potential |
| 289 | Einzelzellgehäuseplatte |
| 290 | Folie, insbesondere Wärmeleit- und/oder Isolationsfolie |
| 191, 191^{I} | Kühlkanalkammer |
| 292, 292^{I}, 292^{II} | Kühlmittelleitung |
| 93, 93^{I}, 193, 193^{I}, 293, 293^{I} | Abstandshalter |
| 194, 194^{I}, 194^{II} | Kühlkanallamelle |
| 195 | Dichtlippe |
| 196 | erste Kühlkanalweite |
| 197 | zweite Kühlkanalweite |
| 198, 198^{I} | Temperatursensor |
| 199, 199^{I} | Kompensationsstrecke |
| A-A | Schnitt A-A, insbesondere Schnittebene |
| X | Schnitt X |

## Patentansprüche

1. Traktionsakkumulator (1, 1^{I}, 1^{II}, 101, 101^{I}, 101^{II}, 201, 301) für ein Kraftfahrzeug, wie einen Personenkraftwagen,
mit Lithium-Ionen-Sekundärzellen (3, 3^{I}, 3^{II}, 3^{III}, 103, 103^{I}),
deren Grundform (5, 105)
zwei Langseiten (7, 7^{I}), zwei Hochseiten (9, 9^{I}, 109, 109^{I}) und eine Breite (11) aufweist und in Richtung ihrer Breite (11) eine geringste Ausdehnung aufweist,
und wobei Konversionsvolumina (21) der einzelnen Lithium-Ionen-Sekundärzellen (3, 3^{I}, 3^{II}, 3^{III}, 103, 103^{I}) benachbart hintereinander, parallel zueinander platziert sind,
und wobei die Lithium-Ionen-Sekundärzellen (3, 3^{I}, 3^{II}, 3^{III}, 103, 103^{I}) zu einem Akkumulatorpaket zusammengefasst sind,
und mit einem Gehäuse (31, 3^{I}, 31^{II,} 131, 131^{I}, 131^{II} 131^{III}, 231, 231^{I}, 231^{II}, 231^{III}; 33, 133, 133^{I}, 133^{II}, 233), das eine Lithium-Ionen-Sekundärzelle (3, 3^{I}, 3^{II}, 3^{III}, 103, 103^{I}) oder eine Gruppe von Lithium-Ionen-Sekundärzellen (3, 3^{I}, 3^{II}, 3^{III}, 103, 103^{I}) gemeinsam einfasst und dicht an die einzelne oder mehreren Sekundärzellen (3, 3^{I}, 3^{II}, 3^{III}, 103, 103^{I}) anschließt, sodass zumindest eine Lithium-Ionen-Sekundärzelle (3, 3^{I}, 3^{II}, 3^{III}, 103, 103^{I}) in Flächenberührung mit dem Gehäuse (31, 3^{I}, 31^{II}, 131, 131^{I}, 131^{II}, 131^{III}, 231, 231^{I}, 231^{II}, 231^{III} 33, 133, 133^{I}, 133^{II}, 233) steht,
**dadurch gekennzeichnet, dass**
die Lithium-Ionen-Sekundärzellen (3, 3^{I}, 3^{II}, 3^{III}, 103, 103^{I}) jeweils eine positive erste Elektrode, eine negative zweite Elektrode, einen Separator und einen nicht-wässrigen Elektrolyten enthalten,
wobei die erste Elektrode, die zweite Elektrode und ein aktiver Bereich des Elektrolyten vollflächig, plan und parallel zueinander angeordnet sind, und
die Grundform (5, 105) eine wenigstens entlang einer Langseite (7, 7') verlaufende dreifache Länge (13) im Vergleich zu einer entlang einer Hochseite (9, 9^{I}, 109, 109^{I}) verlaufenden Höhe (15, 115) der Grundform (5, 105) hat,
und dass Wärme aus aktiven Flächen (19, 119) der einzelnen Sekundärzellen (3, 3^{I}, 3^{II}, 3^{III}, 103, 103^{I}) in einen Teil des Gehäuses (31, 31^{I}, 31^{II}, 131, 131^{I}, 131^{II}, 131^{III}, 231, 231^{I}, 231^{II}, 231^{III} 33, 133, 133^{I}, 133^{II}, 233), nämlich in eine mit einer Dicke ausgestalteten Seite einleitbar ist,
wobei eine durch einen Schnitt durch die Sekundärzelle (3, 3^{I}, 3^{II}, 3^{III}, 103, 103^{I}) sich ergebende Schnittfläche zu wenigstens 80 % eine aktive Fläche (19, 119) aufweist.

2. Traktionsakkumulator (1, 1^{I}, 1^{II}, 101, 101^{I}, 101^{II}, 201, 301) nach Anspruch 1,
**dadurch gekennzeichnet, dass**
das Gehäuse ein Modulgehäuse (33) ist,
wobei vorzugsweise in dem Modulgehäuse (33) ein erster Konvektionskanal (77, 177) zwischen einer Innenseite (73) einer ersten Modulgehäuseseitenwand (61) und der aktiven Fläche (19) angeordnet ist und insbesondere ein zweiter Konvektionskanal (77^{I}, 177^{I}) vor einer Innenseite (73^{I}) einer zweiten Modulgehäuseseitenwand (61^{I}) für eine gleichseitige Wärmeabfuhr angeordnet ist.

3. Traktionsakkumulator (1, 1^{I}, 1^{II}, 101, 101^{I}, 101^{II}, 201, 301) nach Anspruch 2,
**dadurch gekennzeichnet, dass**
zwischen der aktiven Fläche (19, 119) und den Modulgehäuseseitenwänden (61, 61^{I}) Abstandshalter (93, 93^{I}) für eine gleichmäßige Positionierung von Lithium-Ionen-Sekundärzellen (3, 3^{I}, 3^{II}, 3^{III}, 103, 103^{I}) angeordnet sind, die als Wärmeleitungsbrücken für Wärme aus mittleren Bereichen (17, 17^{I}) der aktiven Fläche (19, 119) dienen,
wobei insbesondere die Abstandshalter (93, 93^{I}) für eine elektrische Kontaktierung ausgebildet sind und
vorzugsweise ein oder mehrere Abstandshalter (93, 93^{I}) als Strömungsleitbleche eines Konvektionskanals (77, 77^{I}, 177, 177^{I}) oder eines Kühlkanals oder als Teil einer Kühlkanalkammer ausgebildet sind.

4. Traktionsakkumulator (1, 1^{I}, 1^{II}, 101, 101^{I}, 101^{II}, 201, 301) nach einem der vorhergehenden Ansprüche,
**dadurch gekennzeichnet, dass**
sich auf einer Oberseite des Traktionsakkumulators (1, 1^{I}, 1^{II}, 101, 101^{I}, 101^{II}, 201, 301), insbesondere im Bereich eines Modulgehäusedeckels (65^{I}),
mindestens eine erste Konvektionsausströmöffnung (79) und eine zweite Konvektionsausströmöffnung (79^{I}) befinden und
vorzugsweise Konvektionseinströmöffnungen (75) als Eingänge für Kühlmittel, wie Luft, in einem Modulgehäuseboden (63^{I}) angeordnet sind,
von denen ganz bevorzugt sich eine erste Konvektionseinströmöffnung (75) mittig zwischen zwei Konvektionsausströmöffnungen (79, 79^{I}) in einem Bereich des Modulgehäusebodens (63^{I}) befindet.

5. Traktionsakkumulator (1, 1^{I}, 1^{II}, 101, 101^{I}, 101^{II}, 201, 301) nach einem der vorhergehenden Ansprüche,
**dadurch gekennzeichnet, dass**
im Bereich (17, 17^{I}) der Hochseiten (9, 9^{I}, 109, 109^{I}) Polfahnen (25, 125, 27, 127) an einer aktiven Fläche (19, 119) bzw. an aktiven Elementen (19, 119), insbesondere durch ein Schweißen (129), angeschlossen sind, insbesondere an Schweißpunkten (129) befestigt sind,
und vorzugsweise eine erste Polfahne (25, 125) einen ersten Abstand zu der Langseite (7, 7') und eine zweite Polfahne (27, 127) einen zweiten Abstand zu der Langseite (7, 7') haben,
wobei vorzugsweise der erste Abstand und der zweite Abstand im Wesentlichen gleich groß sind.

6. Traktionsakkumulator (1, 1^{I}, 1^{II}, 101, 101^{I}, 101^{II}, 201, 301) nach einem der vorhergehenden Ansprüche,
**dadurch gekennzeichnet, dass**
jede Sekundärzelle (3, 3^{I}, 3^{II}, 3^{III}, 103, 103^{I}) einzeln (53, 53^{I}, 53^{II}, 153, 153^{I}) oder als Teil einer Gruppe (253, 253^{I}, 253^{II}, 253^{III}) in ein eigenes Gehäuse (31, 31^{I}, 31^{II}, 131, 131^{I}, 131^{II} 131^{III}, 231, 231^{I}, 231^{II}, 231^{III} 331, 331^{I}, 331^{II}, 331^{III}), insbesondere in ein Zellengehäuse (31, 31^{I}, 31^{II}, 131, 131^{I}, 131^{II}, 131^{III}, 231, 231^{I}, 231^{II}, 231^{III}, 331, 331^{I}, 331^{II}, 331^{III}) mit einem Zellengehäusemantelkörper, der insbesondere als einstückiger Metallkörper, vorzugsweise als vierseitige Strangpresseinheit, gebildet ist, eingehüllt ist.

7. Traktionsakkumulator (1, 1^{I}, 1^{II}, 101, 101^{I}, 101^{II}, 201, 301) nach einem der vorhergehenden Ansprüche,
**dadurch gekennzeichnet, dass**
eine elektrische Leitung (55, 57, 155, 157, 255, 257) in einem mittleren Bereich (17, 17^{I}) der Hochseiten (15, 115) quer zur Reaktionsfläche der aktiven Fläche (19, 119) bzw. eines aktiven Elements (19, 119) angeordnet ist, womit, insbesondere über die Polfahnen (25, 27, 125, 127), elektrischer Strom abgeleitet werden kann.

8. Traktionsakkumulator (1, 1^{I}, 1^{II}, 101, 101^{I}, 101^{II}, 201, 301) nach einem der Ansprüche 6 oder 7,
**dadurch gekennzeichnet, dass**
das Gehäuse (31, 31^{I}, 31^{II}, 131, 131^{I}, 131^{II}, 131^{III}, 231, 231^{I}, 231^{II}, 231^{III}, 331, 331^{I}, 331^{II}, 331^{III}, 33, 33^{I}, 133, 133^{I}, 133^{II}, 233, 333), genauer das Zellengehäuse (31, 31^{I}, 31^{II}, 131, 131^{I}, 131^{II}, 131^{III}, 231, 231^{I}, 231^{II}, 231^{III}, 331, 331^{I}, 331^{II}, 331^{III}) und/oder das Modulgehäuse (33, 33^{I}, 133, 133^{I}, 133^{II}, 233, 333), aus einem aus einem Metall wie Aluminium oder Edelstahl gefertigten Strangpressprofil hergestellt ist, das insbesondere unterschiedliche Dicken an zumindest zwei Seiten des Gehäuses (31, 31^{I}, 31^{II}, 131, 131^{I}, 131^{II}, 131^{III}, 231, 231^{I}, 231^{II}, 231^{III}, 331, 331^{I}, 331^{II}, 331^{III}, 33, 33^{I}, 133, 133^{I}, 133^{II}, 233, 333) aufweist.

9. Traktionsakkumulator (1, 1¹, 1^{II}, 101, 101^{I}, 101^{II}, 201, 301) nach einem der Ansprüche 3 bis 8,
**dadurch gekennzeichnet, dass**
der Abstandshalter (93, 93^{I}) für mindestens eine Lithium-Ionen-Sekundärzelle (3, 3^{I}, 3^{II}, 3^{III}, 103, 103^{I}) oder mindestens ein Sekundärzellenpaket,
vorzugsweise für mindestens ein Zellengehäuse (31, 31^{I}, 31^{II}, 131, 131^{I}, 131^{II}, 131^{III}, 231, 231^{I}, 231^{II}, 231^{III} 331, 331^{I}, 331^{II}, 331^{III}),
an einer Seitenwand (61, 61^{I}, 161, 161^{I}, 261, 261^{I}), wie eine zusätzliche Seitenwand, als einstückiges Bestandteil des Modulgehäuses (33, 33^{I}, 133, 133^{I}, 133^{II}, 233, 333) ausgebildet ist.

10. Traktionsakkumulator (1, 1^{I}, 1^{II}, 101, 101^{I}, 101^{II}, 201, 301) nach einem der vorhergehenden Ansprüche,
**dadurch gekennzeichnet, dass**
ein Gehäuse (31, 31^{I}, 31^{II}, 131, 131^{I}, 131^{II}, 131^{III}, 231, 231^{I}, 231^{II}, 231^{III}, 331, 331^{I}, 331^{II}, 331^{III}, 33, 33^{I}, 133, 133^{I}, 133^{II}, 233, 333) eine durch die aktive Fläche bzw. durch ein aktives Element (19, 119) beanspruchte, in einem Schnitt bestimmte Fläche um zwei Prozent nach Außen (51, 151) erweitert.

11. Traktionsakkumulator (1, 1^{I}, 1^{II}, 101, 101^{I}, 101^{II}, 201, 301) nach einem der vorhergehenden Ansprüche,
**dadurch gekennzeichnet, dass**
eine Anzahl Zellen, die zwischen zehn und vierzig Sekundärzellen (3, 3^{I}, 3^{II}, 3^{III}, 103, 103^{I}) beträgt, mit ihren aktiven Flächen bzw. ihren aktiven Elementen (19, 119) nebeneinander angeordnet in einem Zellengehäuse (31, 31^{I}, 31^{II}, 131, 131^{I}, 131^{II}, 131^{III}, 231, 231^{I}, 231", 231^{III}, 331, 331^{I}, 331^{II}, 331^{III}) oder in einem Modulgehäuse (33, 33^{I}, 133, 133^{I}, 133^{II}, 233, 333) zur Bildung eines Akkumulatorpakets eingespannt sind, um eine Serienverschaltung der Sekundärzellen (3, 3^{I}, 3^{II}, 3^{III}, 103, 103^{I}) herzustellen.

12. Traktionsakkumulator (1, 1^{I}, 1^{II}, 101, 101^{I}, 101^{II}, 201, 301) nach einem der vorhergehenden Ansprüche,
**dadurch gekennzeichnet, dass**
die Sekundärzellen (3, 3^{I}, 3^{II}, 3^{III}, 103, 103^{I}) von einer Trägerplatte (45, 145, 145^{I}, 245) unterstützt oder überspannt sind,
wobei vorzugsweise der Traktionsakkumulator (1, 1^{I}, 1^{II}, 101, 101^{I}, 101^{II}, 201, 301) eine thermische Austauschfläche (71) an seiner tiefsten anzuordnenden Fläche aufweist, insbesondere gebildet durch die Trägerplatte (45, 145, 145^{I}, 245).

13. Traktionsakkumulator (1, 1^{I}, 1^{II}, 101, 101^{I}, 101^{II}, 201, 301) nach einem der vorhergehenden Ansprüche,
**dadurch gekennzeichnet, dass**
das Modulgehäuse (33, 33^{I}, 133, 133^{I}, 133^{II}, 233, 333) ein mit einem Zugelement (334) aufgebautes Kastengehäuse ist, das die Lithium-Ionen-Sekundärzellen (3, 3^{I}, 3^{II}, 3^{III}, 103, 103^{I}) mit deren Zellengehäusen (331, 331^{I}, 331^{II}, 331^{III}) im Inneren des Modulgehäuses (333) einspannt,
wobei vorzugsweise das Zugelement (334) hohl ist und zugleich als Kühlkanal nutzbar ist.

14. Traktionsakkumulator (1, 1^{I}, 1^{II}, 101, 101^{I}, 101^{II}, 201, 301) nach einem der Ansprüche 4 bis 13,
**dadurch gekennzeichnet, dass**
zwischen dem Modulgehäusedeckel (65^{I}) und Modulgehäuseanschlussflächen (85, 85^{I}, 85^{II}) und/oder auf einem Modulgehäuseboden (63^{I}) eine Ausgleichsmasse oder eine Folie (290) vorhanden ist, die eine wärmeleitende Verbindung mit den Lithium-Ionen-Sekundärzellen (3, 3^{I}, 3^{II}, 3^{III}, 103, 103^{I}) bildet,
wobei insbesondere die Ausgleichsmasse einen Wärmeleitungskoeffizienten von mehr als 1 W/(m*K) und vorzugsweise eine Dicke von weniger als 1 mm hat.

15. Traktionsakkumulator (1, 1^{I}, 1^{II}, 101, 101^{I}, 101^{II}, 201, 301) nach einem der vorhergehenden Ansprüche,
**dadurch gekennzeichnet, dass**
der Traktionsakkumulator (1, 1^{I}, 1^{II}, 101, 101^{I}, 101^{II}, 201, 301) einen ersten Abfuhrzweig für Wärmeleistung durch einen ebenflächigen Anschluss der aktiven Fläche (19, 119) an den Modulgehäuseboden (163), einen zweiten Abfuhrzweig für Wärmeleistung, gebildet durch Kühlkanäle (135, 137), dessen Kühlleistung insbesondere bedarfsabhängig in Verbindung mit einem geschlossenen Kühlkreislauf zuschaltbar ist, und mindestens einen weiteren Abfuhrzweig für Wärmeleistung, wie mindestens eine Wärmeleitungsbrücke, aufweist.

16. Herstellungsprozess eines Traktionsakkumulators (1, 1^{I}, 1^{II}, 101, 101^{I}, 101^{II}, 201, 301), insbesondere eines Traktionsakkumulators (1, 1^{I}, 1^{II}, 101, 101^{I}, 101^{II}, 201, 301) nach einem der vorhergehenden Ansprüche,
mit mindestens einem Gehäuse (31, 31^{I}, 31^{II}, 131, 131^{I}, 1311^{II}, 131^{III}, 231, 231^{I}, 231^{II}, 231^{III}, 33, 133, 133^{I}, 133^{II}, 233),
wobei der Traktionsakkumulator(1, 1^{I}, 1^{II}, 101, 101^{I}, 101^{II}, 201, 301) mehrere elektrochemische Sekundärzellen (3, 3^{I}, 3^{II}, 3^{III}, 103, 103^{I}) aufweist,
**dadurch gekennzeichnet, dass**
die Sekundärzellen (3, 3^{I}, 3^{II}, 3^{III}, 103, 103^{I}) jeweils mit einer positiven Elektrode, einer negativen Elektrode und einem dazwischen angeordneten Separator ausgebildet sind, wobei wenigstens vier Seiten des Gehäuses (31, 31^{I}, 31^{II}, 131, 131^{I}, 131^{II}, 131^{III}, 231, 231^{I}, 231^{II}, 2311^{III}; 33, 133, 133^{I}, 133^{II}, 233) auf einmal durch ein und den gleichen Strangpressvorgang als Strangpressprofil hergestellt werden,
wobei aus dem als längliche Hohlschiene gefertigten Strangpressprofil ein Stück abgelängt wird, das kastenförmig ist,
wobei die elektrochemischen Sekundärzellen (3, 3^{I}, 3^{II}, 3^{III}, 103, 103^{I}) eine Grundform (5, 105) mit einer wenigstens entlang einer Langseite (7, 7') verlaufenden dreifachen Länge (13) im Vergleich zu einer entlang einer Hochseite (9, 9^{I}, 109, 109^{I}) verlaufenden Höhe (15, 115) der Grundform (5, 105) haben,
und nach Einführung der Sekundärzellen (3, 3^{I}, 3^{II}, 3^{III}, 103, 103^{I}) in das Strangpressprofil selbiges an seinen Enden jeweils durch eine erste und eine zweite Abdeckplatte als Deckel (65, 65^{I}, 165, 265, 365) verschlossen wird,
wobei Sekundärzellen (3, 3^{I}, 3^{II}, 3^{III}, 103, 103^{I}) und Gehäuse (31, 31^{I}, 31^{II}, 131, 131^{I}, 1311^{II}, 131^{III}, 231, 231^{I}, 231^{II}, 231^{III}; 33, 133, 133^{I}, 133^{II}, 233) aneinander anliegen,
und wobei eine der Abdeckplatten einen Kontakt (47, 49) aufweist, der eine elektrische Verbindungsstelle aus dem Gehäuse (31, 31^{I}, 31^{II}, 131, 131^{I}, 1311^{II}, 131^{III}, 231, 231^{I}, 231^{II}, 231^{III}; 33, 133, 133^{I}, 133^{II}, 233) heraus bietet.
